# EUROPÄISCHE PATENTSCHRIFT

(11) **EP 3 921 116 B1**
(45) Veröffentlichungstag und Bekanntmachung des Hinweises auf die Patenterteilung: **22.04.2026**
(21) Anmeldenummer: 20703029.7
(22) Anmeldetag: 31.01.2020
(51) Int. Cl.: B24B 23/02, B24B 23/04, B24B 41/04, B24B 47/12, F16F 15/28, F16F 15/36

(54) **WERKZEUGMASCHINE MIT EINER WUCHTEINRICHTUNG**
MACHINE TOOL HAVING A BALANCING DEVICE
MACHINE-OUTIL COMPORTANT UN DISPOSITIF D'ÉQUILIBRAGE

(30) Priorität: 07.02.2019 DE 102019103087
(43) Veröffentlichungstag der Anmeldung: 15.12.2021
(73) Patentinhaber: Festool GmbH, 73240 Wendlingen am Neckar (DE)
(72) Erfinder: RUHLAND, Harald, 73249 Wernau (DE)
(74) Vertreter: Patentanwälte Bregenzer und Reule Partnerschaftsgesellschaft mbB
(86) Internationale Anmeldenummer: PCT/EP2020/052508
(87) Internationale Veröffentlichungsnummer: WO 2020/161025

(56) Entgegenhaltungen:
- EP-A1- 2 596 908
- WO-A2-02/08636
- DE-A1- 102008 027 327
- DE-T2- 69 305 988

## Beschreibung

Die Erfindung betrifft eine Werkzeugmaschine, nämlich eine Hand-Werkzeugmaschine oder eine halbstationäre Werkzeugmaschine, gemäß dem Oberbegriff des Anspruchs 1.

Eine derartige Werkzeugmaschine ist zum Beispiel in EP 2 596 980 A1 erläutert.

Eine Werkzeugmaschine gemäß US 6,974,362 B2 ist beispielsweise eine Schleifmaschine, deren Wuchteinrichtung zwei Führungskörper in axialem Abstand bezüglich der Drehachse aufweist, die jeweils eine Umlaufbahn umfassen, wobei der eine Führungskörper mit seiner Umlaufbahn nahe bei dem Tellerwerkzeug und der andere Führungskörper mit seiner Umlaufbahn weit vom Tellerwerkzeug entfernt angeordnet ist, wobei zwischen den Führungskörpern bzw. Umlaufbahnen der Antriebsmotor angeordnet ist.

Der Aufbau der bekannten Werkzeugmaschine ist kompliziert und aufwendig in der Herstellung.

Es ist daher die Aufgabe der vorliegenden Erfindung, eine verbesserte Werkzeugmaschine bereitzustellen.

Zur Lösung der Aufgabe ist eine Werkzeugmaschine gemäß der technischen Lehre des Anspruchs 1 vorgesehen.

Die Wuchtkörper sind in ihren jeweiligen Umlaufbahnen beweglich aufgenommen. Die Wuchtkörper können jedoch nicht von ihrer Umlaufbahn, in der sie beweglich gelagert sind und/oder umlaufen, in eine andere Umlaufbahn gelangen. So kann also beispielsweise ein in der ersten Umlaufbahn aufgenommener Wuchtkörper nicht in die mindestens eine zweite Umlaufbahn gelangen oder ein in der mindestens einen zweiten Umlaufbahn aufgenommener Wuchtkörper in die erste Umlaufbahn gelangen.

Der mindestens eine Wuchtkörper in der Umlaufbahn mit größerem radialen Abstand zur Drehachse dient dabei vorteilhaft zur Grobabstimmung oder dem Grob-Trimm der Wuchteinrichtung, der mindestens eine Wuchtkörper in der Umlaufbahn mit kleineren radialen Abstand zur Drehachse leistet zweckmäßigerweise sozusagen die Feinabstimmung oder den Fein-Trimm. Bevorzugt sind jedoch mindestens zwei Wuchtkörper, die eine Wuchtung des Antriebsstrangs auch dann optimal ermöglichen, wenn der Antriebsstrang an sich schon nur eine geringe Unwucht aufweist.

Es ist ein Grundgedanke dabei, dass an einem einzigen Führungskörper mehrere Umlaufbahnen, beispielsweise zwei Umlaufbahnen oder drei Umlaufbahnen, angeordnet sind, die bezüglich der Drehachse oder in Längsrichtung der Drehachse einen Abstand zueinander aufweisen und zudem auch unterschiedliche radiale Abstände zur Drehachse haben, sodass unterschiedliche Wucht-Funktionen realisierbar sind. Die Wuchtkörper, beispielsweise ein Wuchtkörper, zwei Wuchtkörper oder weitere Wuchtkörper, sind zwar in einer jeweiligen Umlaufbahn beweglich gelagert, verbleiben in dieser Umlaufbahn und gelangen nicht in eine benachbarte Umlaufbahn, können also nicht von der einen Umlaufbahn in die andere Umlaufbahn verstellt werden bzw. werden käfigartig in ihrer jeweiligen Umlaufbahn gehalten. Kein Wuchtkörper kann also von der Umlaufbahn, der er zugeordnet und/oder in der er angeordnet ist, in eine andere Umlaufbahn, beispielsweise benachbarte Umlaufbahn, gelangen.

Die Anordnung mehrerer Umlaufbahnen in einem Führungskörper ermöglicht es, den Führungskörper kompakt auszugestalten. Weiterhin ist es möglich, den Führungskörper durch entsprechende, z.B. spanende, Werkstück-Bearbeitung eines Grundkörpers, aus dem der Führungskörper gebildet ist, maßgenau herzustellen, sodass die Wuchteigenschaften optimal einstellbar sind.

Der Führungskörper weist beispielsweise einen Grundkörper auf, an dem einstückig die erste und die mindestens eine zweite Umlaufbahn, ggf. weitere Umlaufbahnen, ausgebildet sind. Beispielsweise ist der Grundkörper spanend bearbeitet. Die erste und mindestens eine zweite Umlaufbahn sind also durch eine spanende Bearbeitung, beispielsweise eine Dreh-Bearbeitung, Fräs-Bearbeitung oder dergleichen, des Grundkörpers gebildet.

Der Grundkörper besteht vorzugsweise aus Metall, beispielsweise aus Stahl, Aluminium oder einer Legierung. Der Grundkörper kann aber auch aus Keramik oder einem Kunststoff bestehen.

Der Grundkörper ist zweckmäßigerweise an einer Werkstückhalterung nach Abschluss der Herstellung der ersten Umlaufbahn bis zum Beginn oder zur Fertigstellung der mindestens einen zweiten Umlaufbahn gehalten bzw. verbleibt an der Werkstückhalterung. Mithin ist also die erste Umlaufbahn sozusagen maßgenau hergestellt, und der Grundkörper verbleibt an oder in der Werkstückhalterung, insbesondere in derselben Aufspannung, um anschließend die zweite Umlaufbahn, vorteilhafterweise auch weitere oder alle Umlaufbahnen, in derselben Aufspannung oder derselben Werkstückhalterung herzustellen. Dadurch ist eine hohe Maßgenauigkeit realisierbar. Vorzugsweise verbleibt der Grundkörper von Beginn der Herstellung mindestens zweier Umlaufbahnen, zweckmäßigerweise aller Umlaufbahnen bis zum Abschluss der Herstellung dieser Umlaufbahnen in derselben Aufspannung und/oder an der derselben Werkstückhalterung.

Der Führungskörper kann z.B. eine scheibenartige oder tellerartige oder domartige Gestalt aufweisen.

Zwischen den Umlaufbahnen des Führungskörpers ist vorzugsweise kein Abschnitt der Werkzeugwelle vorgesehen. Vorteilhaft sind die Umlaufbahnen des Führungskörpers nicht durch die Werkzeugwelle miteinander verbunden.

Der Führungskörper kann ein von der Werkzeugwelle separater Führungskörper sein. Der Führungskörper und die Werkzeugwelle werden beispielsweise durch eine Steck-Montage, Verschweißung, Verpressung oder dergleichen, miteinander verbunden. Der Führungskörper hat vorteilhaft eine Formschlussaufnahme und/oder Steckaufnahme zum formschlüssigen Halten bzw. zum Einstecken der Werkzeugwelle.

Ein bevorzugtes Konzept sieht vor, dass der Führungskörper und die Werkzeugwelle einstückig sind. Mithin werden also der Führungskörper und die Werkzeugwelle aus demselben Grundkörper hergestellt, beispielsweise durch eine spanende Bearbeitung, insbesondere eine Dreh-Bearbeitung. Dabei ist es vorteilhaft, wenn die Werkzeugwelle und mindestens eine der Umlaufbahn, vorzugsweise alle Umlaufbahnen, an dem Grundkörper hergestellt werden, ohne dass dieser beispielsweise anders aufgespannt wird oder von einer Werkstückhalterung entfernt wird, an der er zur insbesondere spanenden Herstellung der Werkzeugwelle und mindestens einer Umlaufbahn angeordnet ist.

Der Führungskörper ist erfindungsgemäß durch einen Deckel verschlossen. Mithin ist vorgesehen, dass der Führungskörper erfindungsgemäß nur einen einzigen Deckel aufweist, mit dem die erste Umlaufbahn und die zweite Umlaufbahn verschlossen sind.

Die Umlaufbahnen werden also beispielsweise durch eine Dreh-Bearbeitung des Führungskörpers hergestellt. Anschließend wird der mindestens eine Wuchtkörper oder werden mehrere Wuchtkörper in die jeweilige Umlaufbahn eingesetzt. Danach werden die Umlaufbahnen durch den einzigen oder mehrere Deckel verschlossen. Wenn nur ein einziger Deckel vorhanden ist, kann dieser besonders maßgenau hergestellt sein. Auch bei dem Deckel ist es vorteilhaft, wenn er in derselben Aufspannung oder verbleibend in einer Werkstückhalterung die entsprechenden Führungskonturen für die Umlaufbahnen erhält, beispielsweise durch eine Dreh-Bearbeitung.

Der Deckel verschließt mehrere Umlaufbahnen oder alle Umlaufbahnen, des Führungskörpers parallel zur Drehachse und/oder bezüglich der Drehachse radial innen. Beispielsweise sind die radial äußeren Führungskonturen der jeweiligen Umlaufbahn an dem Führungskörper ausgebildet und werden seitlich und/oder radial innen durch den Deckel verschlossen.

Prinzipiell ist es möglich, dass eine oder mehrere Umlaufbahnen des Führungskörpers gegenüber einer anderen Umlaufbahn, beispielsweise einer benachbarten Umlaufbahn, zumindest teilweise geöffnet sind, beispielsweise strömungstechnisch oder fluidtechnisch miteinander kommunizieren. Gleichwohl verbleiben die Wuchtkörper in der jeweiligen Umlaufbahn.

Ein bevorzugtes Konzept sieht jedoch vor, dass mindestens eine Umlaufbahn, vorzugsweise alle Umlaufbahnen oder mehrere Umlaufbahnen, des Führungskörpers gegenüber der anderen Umlaufbahn oder gegenüber den anderen Umlaufbahnen des Führungskörpers vollständig verschlossen ist. Dadurch ist es beispielsweise möglich, ein Dämpfungsfluid, insbesondere Öl, ein Fett oder dergleichen, in der jeweiligen Umlaufbahn zu halten, ohne dass dies in eine andere Umlaufbahn gelangen kann.

Ein bevorzugtes Konzept sieht nämlich vor, dass in mindestens zwei Umlaufbahnen des Führungskörpers unterschiedliche Dämpfungsfluide angeordnet sind oder dass von zwei Umlaufbahnen nur eine Umlaufbahn ein Dämpfungsfluid enthält. So können beispielsweise Öle mit unterschiedlicher Viskosität in den jeweiligen Umlaufbahnen angeordnet sein, um die Dämpfungseigenschaften oder Wuchteigenschaften der jeweiligen Umlaufbahn optimal einzustellen.

Die Umlaufbahnen können geometrisch gleich sein. Weiterhin ist es möglich, dass die Umlaufbahnen gleiche Gleiteigenschaften oder Reibeigenschaften haben.

Eine jeweilige Umlaufbahn kann beispielsweise eine kugelige Geometrie, also eine Art Kugelrinne, eine U-förmige Nut, eine V-förmige Nut, eine Planfläche oder dergleichen umfassen.

Es ist aber auch möglich, dass Oberflächen, die den jeweiligen mindestens einen Wuchtkörper einer Umlaufbahn lagern, bei der ersten Umlaufbahn und der mindestens einen zweiten Umlaufbahn unterschiedliche Gleiteigenschaften und/oder unterschiedliche Geometrien aufweisen. Beispielsweise können die Umlaufbahnen aus unterschiedlichen Materialen bestehen, insbesondere Keramik und Metall, so dass sich dadurch unterschiedliche Gleiteigenschaften oder Reibeigenschaften ergeben. Auch die Geometrien können unterschiedlich sein, was das Bewegungsverhalten des mindestens einen Wuchtkörpers entlang der ihn lagernden Oberfläche der jeweiligen Umlaufbahn beeinflusst. So kann bei einer Umlaufbahn beispielsweise eine kugelige Geometrie vorgesehen sein, während eine andere Umlaufbahn eine Planfläche, eine V-Nut oder dergleichen umfasst oder dadurch gebildet ist.

Die erste und die mindestens eine zweite Umlaufbahn umfassen erfindungsgemäß zwei Umlaufbahnen oder bilden zwei Umlaufbahnen, in denen Wuchtkörper mit unterschiedlicher Geometrie und/oder unterschiedlichen Gleiteigenschaften und/oder in unterschiedlicher Anzahl und/oder aus unterschiedlichen Materialien angeordnet sind. So können beispielsweise Keramik-Wuchtkörper und Metall-Wuchtkörper in den Umlaufbahnen angeordnet sein, so dass sich dadurch unterschiedliches Gewicht und unterschiedliches Material ergeben. Weiterhin ist es möglich, dass beispielsweise in der einen Umlaufbahn mehr Wuchtkörper als in der anderen Umlaufbahn angeordnet sind.

Geometrisch vorteilhaft ist die nachfolgende Maßnahme, bei der die Umlaufbahn mit dem größten radialen Abstand zu der Drehachse näher bei der Werkzeugaufnahme und/oder bei dem Arbeitswerkzeug als die mindestens eine Umlaufbahn mit dem kleineren radialen Abstand zu der Drehachse ist. Somit kann sozusagen die Umlaufbahn mit dem kleineren radialen Abstand in größerem Abstand zur Werkzeugaufnahme und somit in größerem Abstand zu dem Arbeitswerkzeug eine Feintrimm-Eigenschaft aufweisen, während die Umlaufbahn mit dem größeren radialen Abstand sozusagen eine gröbere, jedoch effektive Wuchtung leistet.

Ein Längsabstand bezüglich der Drehachse zwischen den Umlaufbahnen der Wuchteinrichtung ist maximal dreimal so groß, vorzugsweise nur zweimal so, wie eine Längserstreckung oder Höhe einer Umlaufbahn bezüglich der Drehachse. Dadurch ergibt sich in Bezug auf die Längsrichtung der Drehachse eine kompakte Konfiguration des Führungskörpers.

Vorteilhaft ist es aber auch, wenn ein möglichst großer Längsabstand zwischen den Umlaufbahnen der Wuchteinrichtung in Bezug auf die Drehachse vorhanden ist. So sieht eine vorteilhafte Maßnahme vor, dass der minimale Abstand beispielsweise 0,5-mal so groß ist wie eine Höhe einer Umlaufbahn. Es ist aber besser, wenn dieser Längsabstand größer ist, beispielsweise das einfache oder 1,5-fache der Längserstreckung oder der Höhe einer Umlaufbahn beträgt.

An dieser Stelle sei bemerkt, dass die Umlaufbahnen bevorzugt dieselbe Höhe bezüglich der Drehachse aufweisen. Es ist aber auch möglich, dass eine Umlaufbahn höher ist als die andere. In diesem Fall kann der Längsabstand zwischen den Umlaufbahnen sowohl auf Basis der Höhe der höheren Umlaufbahn als auch auf Basis der Höhe der niedrigeren Umlaufbahn bemessen sein.

Ein Innenradius der zweiten Umlaufbahn ist vorzugsweise größer als ein Außenradius der ersten Umlaufbahn oder entspricht etwa dem Außenradius der ersten Umlaufbahn. Dadurch lassen sich beispielsweise unterschiedliche Wuchteigenschaften optimal durch die beiden Umlaufbahnen erzielen.

Der Führungskörper hat beispielsweise eine sich um die Drehachse erstreckende Umfangswand, die in einem Bereich näher bei der Werkzeugaufnahme einen größeren Durchmesser aufweist als in einem Bereich, der einen größeren Abstand zu der Werkzeugaufnahme aufweist. Beispielsweise ist die Außenumfangswand konisch oder stufig. Der Führungskörper kann die Gestalt einer Glocke oder eines Kegelstumpfes aufweisen.

Eine an sich eigenständige Erfindung in Verbindung mit den oberbegrifflichen Merkmalen stellt die nachfolgende Maßnahme dar, die aber auch eine Weiterbildung der vorherigen Ausführungsformen sein kann. Dabei ist vorgesehen, dass der Führungskörper ein Bestandteil eines Lüfterrads ist und/oder dass an dem Führungskörper Lüfterschaufeln, insbesondere einstückig, angeordnet sind. Somit hat der Führungskörper sozusagen eine doppelte Funktion, nämlich einerseits die Funktion eines Lüfterrads, andererseits die Funktion eines zentralen Bauteiles der Wuchteinrichtung.

Die Werkzeugaufnahme weist vorzugsweise eine Exzentrizität bezüglich der Drehachse auf. Es ist auch möglich, dass die Werkzeugaufnahme an einem Exzenterlager mit einer Exzentrizität bezüglich der Drehachse angeordnet ist, so dass die Werkzeugaufnahme exzentrisch zu der Drehachse gelagert ist. Somit kann das Arbeitswerkzeug, beispielsweise ein Schleifwerkzeug oder Polierwerkzeug, eine hyperzykloide Bewegung bezüglich der Drehachse der Werkzeugwelle durchlaufen.

Der Führungskörper kann abseits der die Werkzeugwelle an dem Antriebsträger drehbar lagernden Lageranordnung angeordnet sein. Beispielsweise ist der Führungskörper neben der Lageranordnung angeordnet.

Ein vorteilhaftes Konzept, welches aber auch eine in Verbindung mit den oberbegrifflichen Merkmalen des Anspruches 1 an sich eigenständige Erfindung darstellen kann, sieht vor, dass in einem Innenraum des Führungskörpers ein Lager, beispielsweise ein Exzenterlager, angeordnet ist, mit dem die Werkzeugaufnahme relativ zur Drehachse drehbar gelagert ist. Eine Drehachse dieses Drehlagers ist vorzugsweise exzentrisch zu der Drehachse, um die die Umlaufbahnen des Führungskörpers angeordnet sind. Somit kann ein Exzenterlager gebildet sein. Das Lager ist beispielsweise ein Wälzlager, insbesondere ein Rollenlager oder Kugellager. Aber auch ein Gleitlager ist prinzipiell möglich. Der Führungskörper kann integral eine Lageraufnahme für das Drehlager aufweisen, beispielsweise ein Wälzlager. Es ist aber auch möglich, dass das Drehlager, insbesondere Wälzlager, an einer Lageraufnahme der Werkzeugwelle angeordnet ist, die ihrerseits wiederum in einer Aufnahme im Innenraum des Führungskörpers angeordnet ist. Die Werkzeugwelle ist in dem Innenraum des Führungskörpers vorzugsweise formschlüssig gehalten.

Eine an sich eigenständige Erfindung mit den oberbegrifflichen Merkmalen des Anspruches 1, aber auch eine vorteilhafte Ausgestaltung der vorherigen Ausführungsformen sieht vor, dass der Führungskörper zwischen zwei Drehlagern, mit denen die Werkzeugwelle an dem Antriebsträger drehbar gelagert ist, an der Werkzeugwelle gehalten ist. Somit kann der Führungskörper bzw. die Wuchteinrichtung eine optimale Auswuchtung zwischen diesen beiden Drehlagern realisieren.

Vorteilhaft ist weiterhin, wenn kein Lager der die Werkzeugwelle an dem Antriebsträger lagernden Lageranordnung in Bezug auf die Längserstreckung der Drehachse zwischen den Umlaufbahnen der Wuchteinrichtung angeordnet ist. Somit sind also einerseits die Lageranordnung und andererseits der Führungskörper bzw. dessen Umlaufbahnen in Bezug auf die Längserstreckung der Drehachse vorgesehen.

Ein bevorzugtes Konzept sieht vor, dass die Umlaufbahnen Kreisbahnen sind, die mit radialem Abstand um eine Mittelachse verlaufen, wobei die Mittelachse und die Drehachse der Werkzeugwelle koaxial sind. Die Koaxialität ist vorzugsweise eine ideale Koaxialität, d. h. dass die Umlaufbahnen mit exakt gleichem radialem Abstand um die Drehachse der Motorwelle verlaufen.

Der radiale Abstand mindestens einer Umlaufbahn, vorzugsweise aller Umlaufbahnen ist vorzugsweise im Wesentlichen konstant und/oder variiert um maximal 0,05 %, vorteilhaft maximal 0,07 %, weiter vorteilhaft maximal 0,1 % seiner Länge. Eine Exzentrizität der ersten Umlaufbahn und/oder der mindestens einen zweiten Umlaufbahn bezüglich der Drehachse der Motorwelle beträgt vorzugsweise maximal 0,05 %, vorteilhaft maximal 0,07 %, weiter vorteilhaft maximal 0,1 % gegenüber einer idealen Kreisbahn.

Derartige Genauigkeiten können beispielsweise dadurch erzielt werden, dass der Führungskörper oder Grundkörpers zur Herstellung der Umlaufbahnen an der Werkstückhalterung verbleibt und nicht entfernt oder umpositioniert wird, bis die Umlaufbahnen hergestellt sind.

Ein vorteilhaftes Konzept sieht vor, dass an dem Führungskörper eine zu der Drehachse exzentrische Wuchtmasse ortsfest angeordnet ist. Die Wuchtmasse kann einen integralen Bestandteil des Grundkörpers des Führungskörpers bilden. An dem Führungskörper kann beispielsweise eine Partie vorgesehen sein, die sich über ein Winkelsegment des Führungskörpers bezüglich der Drehachse erstreckt, wobei diese Partie ein höheres Gewicht und/oder ein größeres Volumen als andere Partien des Führungskörpers aufweist, die sich über andere Winkelsegmente des Führungskörpers erstrecken. Es ist auch möglich, dass die Wuchtmasse eine von dem Führungskörper oder dessen Grundkörper separate Wuchtmasse ist, die an dem Führungskörper oder Grundkörper angeordnet ist. Die Wuchtmasse ist beispielsweise ein an dem Führungskörper montiertes oder befestigtes Wuchtgewicht.

Weiterhin ist es möglich, dass die Wuchtmasse an dem vorgenannten Deckel, mit dem der Führungskörper verschlossen ist, angeordnet ist, z.B. einen integralen Bestandteil des Deckels bildet oder an diesem befestigt ist. Die Wuchtmasse kann beispielsweise integral an dem Deckel vorgesehen sein oder mit dem Deckel verbunden sein, beispielsweise verschraubt, verklebt oder dergleichen.

Besonders günstig ist es, wenn die Wuchtmasse möglichst nahe beim Arbeitswerkzeug bzw. bei der Werkzeugaufnahme ist.

Ein bevorzugtes Konzept sieht vor, dass die Wuchtmasse an einer der Werkzeugaufnahme zugewandten Seite des Führungskörpers, beispielsweise an einer Stirnseite des Führungskörpers, die dem Arbeitswerkzeug beim Betrieb der Werkzeugmaschine gegenüberliegt, angeordnet ist. Weiterhin ist es vorteilhaft, wenn die Wuchtmasse im Bereich eines Außenumfangs des Führungskörpers mit maximalem Radialabstand zu der Drehachse angeordnet ist. Dort kann sie ihre Wirkung besonders gut entfalten.

Die Werkzeugwelle bildet vorzugsweise eine Motorwelle, an der ein Rotor des Antriebsmotors angeordnet ist. Es ist auch möglich, dass die Werkzeugaufnahme einstückig an der Werkzeugwelle angeordnet ist. Es ist auch möglich, dass die Motorwelle und die Werkzeugwelle zwei voneinander separate, jedoch miteinander verbundene, beispielsweise drehgekoppelte und/oder drehfest miteinander verbundene, Komponenten darstellen. Die Werkzeugaufnahme kann auch eine von der Werkzeugwelle separate, jedoch mit der Werkzeugwelle verbundene, insbesondere drehgekoppelte oder drehfest verbundene, Komponente sein. Beispielsweise ist an der Werkzeugwelle ein Lager, insbesondere ein Exzenterlager angeordnet, an dem seinerseits wiederum die Werkzeugaufnahme angeordnet ist.

An der Werkzeugwelle ist zweckmäßigerweise ein Antriebsabschnitt vorgesehen, mit dem der Antriebsmotor zum Drehantreiben der Werkzeugwelle drehgekoppelt ist, beispielsweise über ein Winkelgetriebe oder ein sonstiges Getriebe. Beispielsweise ist ein Kegelradgetriebe vorgesehen, so dass die Antriebsachse des Antriebsmotors und die Drehachse zueinander winkelig, insbesondere rechtwinkelig, sein können.

Ein in der Zeichnung dargestelltes Konzept, welches bevorzugt ist, sieht jedoch eine Art Direktantrieb vor. Bevorzugt ist es, wenn eine Drehachse des Antriebsmotors und die Drehachse der Werkzeugwelle koaxial miteinander sind. Weiterhin ist es vorteilhaft, wenn der Antriebsmotor an der Werkzeugwelle oder an einer mit der Werkzeugwelle drehfest verbundenen Motorwelle angeordnet ist.

Die Umlaufbahnen des Führungskörpers weisen beispielsweise Führungswände auf, die sich ringförmig um die Drehachse erstrecken und eine Ausdehnung parallel zur Längsachse aufweisen. Die Umlaufbahnen sind beispielsweise als Kugelsitzrinnen oder Kugelmantelflächen ausgestaltet.

Der oder die Wuchtkörper können beispielsweise Kugelgleitkörper und/oder Rollkörper umfassen. Rollkörper sind vorzugsweise kugelförmig, walzenförmig oder dergleichen.

Ein vorteilhaftes Konzept sieht vor, dass der Antriebsträger an einer Halterung der Werkzeugmaschine beweglich gelagert ist, wobei eine Relativposition des Antriebsträgers gegenüber der Halterung durch die Wuchteinrichtung verstellbar ist.

Es ist dabei ein Grundgedanke, dass der Antriebsträger nicht fest und unbeweglich beispielsweise im Maschinengehäuse der Werkzeugmaschine aufgenommen ist, sondern beweglich gelagert ist, was das Wuchtverhalten der Wuchteinrichtung erheblich verbessert. Somit ist der Antriebsträger von der Halterung und beispielsweise dem Maschinengehäuse sozusagen entkoppelt und kann durch die Wuchteinrichtung optimal ausgewuchtet werden. Diese Maßnahme erleichtert insbesondere die Arbeit des Nutzers, indem nämlich weniger Schwingungen auf diesen übertragen werden. Die Schwingungsbelastung des Nutzers wird verringert. Die Werkzeugmaschine weist beispielsweise Maschinengehäuse auf, welches eine Halterung für den beweglich gelagerten Antriebsträger bereitstellt oder eine derartige Halterung bildet. Insbesondere ist es möglich, dass die bewegliche Lagerung Schwingungen mit niedriger Frequenz absorbiert oder verringert.

Bevorzugt ist es, wenn der Antriebsträger bezüglich der Halterung durch eine zwischen dem Antriebsträger und der Halterung angeordnete Federanordnung federnd gelagert ist. Die Federanordnung umfasst beispielsweise einen Puffer, insbesondere aus Gummi, elastischem Kunststoff oder dergleichen. Aber auch metallische Federn, insbesondere Schraubenfedern, Spiralfedern, Torsionsfedern oder dergleichen, sind ohne weiteres möglich. Es können Federn unterschiedlicher Art kombiniert sein, d.h. dass beispielsweise ein Gummipuffer oder elastischer Kunststoff-Puffer in Kombination mit einer metallischen Feder, insbesondere einer Schraubenfeder, zwischen der Halterung und dem Antriebsträger angeordnet ist. Bevorzugt sind mehrere Federn vorgesehen, beispielsweise in unterschiedlichen Winkelpositionen am Außenumfang des Antriebsträgers bzw. am Innenumfang der Halterung, wo der Antriebsträger an die Halterung angelenkt ist.

Die Beweglichkeit des Antriebsträgers bezüglich der Halterung ermöglicht es, dass der Antriebsträger bezüglich der Halterung beim Betrieb der Werkzeugmaschine schwingt, d.h. oszillierende Bewegungen durchführt. Dabei ist es bevorzugt, dass eine erste Eigenfrequenz des Antriebsträgers bezüglich der Halterung kleiner als eine vorbestimmte Umdrehungsfrequenz oder Drehzahl der Werkzeugaufnahme ist. Die Wuchteinrichtung kann somit optimal arbeiten und ein Minimum an Unwuchtkräften beispielsweise auf die Halterung, insbesondere das Maschinengehäuse, übertragen. Die Werkzeugaufnahme erzeugt also bei ihrer Umdrehung um die Drehachse Schwingungen mit einer vorbestimmten Umdrehungsfrequenz, die sich direkt durch die Drehzahl der Werkzeugaufnahme oder die Umdrehungsfrequenz, d.h. die Zeit, innerhalb derer die Werkzeugaufnahme einmal um ihre eigene Achse dreht, bestimmt ist. Diese Drehzahl der Werkzeugaufnahme oder die Umdrehungsfrequenz beträgt beispielsweise bei einer typischen Schleifmaschine oder Poliermaschine etwa 100 Hertz bis 200 Hertz, bei einem Ausführungsbeispiel etwa 150 Hertz bis 170 Hertz. Die Eigenfrequenz des Antriebsträgers bezüglich der Halterung ist vorzugsweise deutlich niedriger, d.h. dass sie beispielsweise fünfmal kleiner, vorzugsweise siebenmal kleiner oder achtmal kleiner ist. Sie kann aber auch mindestens neunmal kleiner oder mindestens zehnmal kleiner als die vorbestimmte Umdrehungsfrequenz oder Drehzahl der Werkzeugaufnahme sein. Im konkreten Fall läge sie beispielsweise bei einer Eigendrehzahl oder Eigenumdrehungsfrequenz der Werkzeugaufnahme von 150 Hertz bei ca. 15 Hertz oder bei einer Umdrehungsfrequenz oder Drehzahl der Werkzeugaufnahme von 166 Hertz bei ca. 17 Hertz.

Insoweit dennoch Unwuchtkräfte entstehen, werden sie mit einer Frequenz, die der Motordrehzahl entspricht, zwischen dem Antriebsträger und der Halterung nur reduziert übertragen.

Die Umdrehungsfrequenz oder Drehzahl ist beispielsweise eine Maximal-Umdrehungsfrequenz oder Maximal-Drehzahl der Werkzeugaufnahme. Die Umdrehungsfrequenz oder Drehzahl kann aber auch eine Nenn-Umdrehungsfrequenz oder Nenn-Drehzahl sein.

Insbesondere ist es vorteilhaft, wenn die Federanordnung derart ausgestaltet ist, dass eine erste Eigenfrequenz des Antriebsträgers bezüglich der Halterung kleiner als die vorbestimmte Umdrehungsfrequenz oder Drehzahl der Werkzeugaufnahme ist.

Es kann vorgesehen sein, dass die erste Eigenfrequenz des Antriebsträgers bezüglich der Halterung durch eine Federkonstante der Federanordnung eingestellt oder einstellbar ist. So kann die Federkonstante beispielsweise dadurch einstellbar sein, dass eine Feder oder ein Dämpferelement härter oder weicher eingestellt ist oder einstellbar ist. Die Federkonstante kann beispielsweise durch Einstellung einer Vorspannung eines oder mehrerer Federelemente veränderbar sein. Dazu ist beispielsweise eine Stelleinrichtung vorgesehen, mit der die Federkonstante einstellbar ist. Insbesondere ist eine derartige Maßnahme vorteilhaft, wenn die Werkzeugmaschine unterschiedliche Drehzahlen der Werkzeugaufnahme ermöglicht, d.h. dass die Werkzeugaufnahme mit unterschiedlichen Drehzahlen betreibbar ist. Dazu kann die Drehzahl des Antriebsmotors einstellbar sein und/oder ein Getriebe zwischen Antriebsmotor und Werkzeugwelle vorgesehen sein, welches zwischen mindestens zwei Gängen schaltbar ist, in denen die Drehzahl der Werkzeugwelle unterschiedlich ist.

Das Konzept mit der beweglichen Lagerung des Antriebsträgers an der Halterung kann auch bei sozusagen autonom arbeitenden Werkzeugmaschinen sinnvoll eingesetzt werden. Beispielsweise weist die Werkzeugmaschine einen Positionierantrieb zum Positionieren der Werkzeugaufnahme für das Arbeitswerkzeug bezüglich einer Werkstückoberfläche für eine Bearbeitung der Werkstückoberfläche durch das Arbeitswerkzeug auf.

Alternativ oder ergänzend ist es aber auch möglich, dass die Halterung einen Handgriff zum Ergreifen durch einen Bediener und/oder eine Mitnahmepartie zur Mitnahme durch einen Positionierantrieb aufweist, anhand dessen die Werkzeugmaschine bezüglich einer Werkstückoberfläche positionierbar ist. Mithin muss also der Positionierantrieb nicht einen Bestandteil der Werkzeugmaschinen bilden.

Der Handgriff ist beispielsweise stabförmig. Der Handgriff kann integral an einem Maschinengehäuse der Werkzeugmaschine vorgesehen sein, beispielsweise nach hinten vor einen Antriebsabschnitt des Maschinengehäuses, in welchem der Antriebsträger angeordnet ist, vorstehen. Es ist aber auch möglich, dass der Handgriff stabförmig ist, beispielsweise einen Teleskopstab oder dergleichen aufweist, so dass die Werkzeugmaschine, insbesondere deren Antriebskopf, wo der Antriebsstrang angeordnet ist, an einer Wandfläche oder Deckenfläche eines Raumes entlang durch einen Bediener führbar ist.

Die Werkzeugmaschine ist in einer Ausführungsform eine handgeführte Werkzeugmaschine, eine sogenannte Hand-Werkzeugmaschine, kann aber auch eine halbstationäre Werkzeugmaschine sein, beispielsweise eine an den Nutzungsort transportierbar Kappsäge, Tischkreissäge oder dergleichen. beispielsweise zwei Umlaufbahnen

Die Werkzeugmaschine kann beispielsweise eine Schleifmaschine oder Poliermaschine sein.

Bevorzugt ist es, wenn die Werkzeugaufnahme zur Befestigung eines Tellerwerkzeugs als das Arbeitswerkzeug ausgestaltet ist. Das Tellerwerkzeug ist beispielsweise ein Polierwerkzeug oder Schleifwerkzeug.

Ohne Weiteres kann die Werkzeugmaschine aber auch eine Sägemaschine, Fräsmaschine oder dergleichen andere handgeführte oder halbstationäre Werkzeugmaschine sein.

Nachfolgend werden Ausführungsbeispiele der Erfindung anhand der Zeichnung erläutert. Es zeigen:

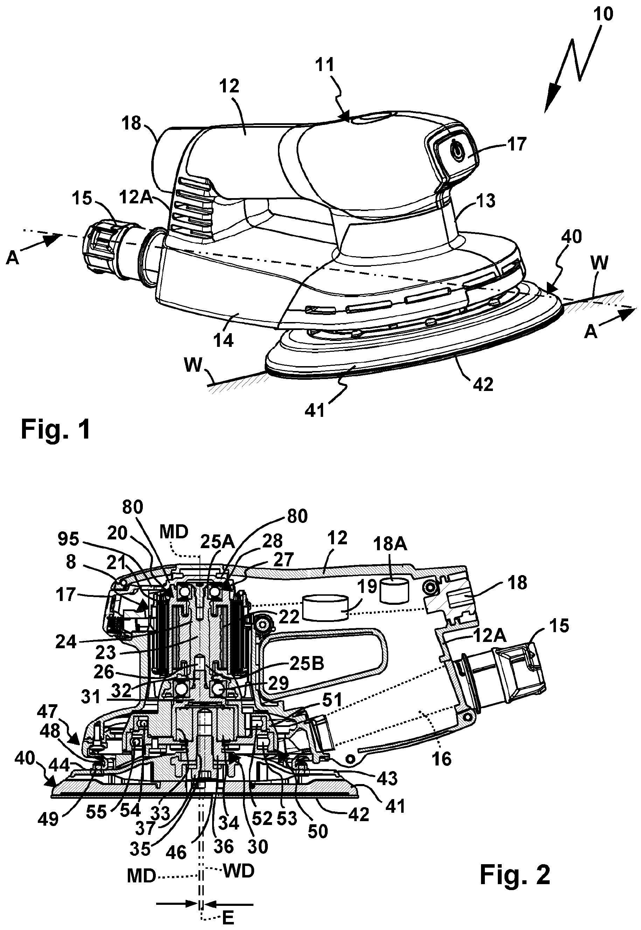

- Figur 1: eine perspektivische Schrägansicht einer Werkzeugmaschine, von der in
- Figur 2: ein Schnitt entlang einer Schnittlinie A-A dargestellt ist,
- Figur 3: eine Wuchteinrichtung der Werkzeugmaschine gemäß Figuren 1, 2 in perspektivischer Ansicht von schräg unten,
- Figur 4: einen Schnitt durch einen Antriebsstrang der Werkzeugmaschine gemäß Figuren 1 und 2, etwa entlang der Schnittlinie A-A,
- Figur 5: eine perspektivische Schrägansicht auf eine Wuchteinrichtung einer Werkzeugmaschine, deren Antriebsstrang in Figur 6 im Querschnitt dargestellt ist,
- Figur 7: eine perspektivische Schrägansicht auf eine weitere Wuchteinrichtung einer Werkzeugmaschine, deren Antriebsstrang im Querschnitt in
- Figur 8: dargestellt ist,
- Figur 9: eine weitere Werkzeugmaschine im Querschnitt, deren Antriebsstrang in
- Figur 10: isoliert dargestellt ist.

Eine Werkzeugmaschine 10 in Gestalt einer Hand-Werkzeugmaschine weist ein Maschinengehäuse 11 auf. Das Maschinengehäuse 11 hat einen zum Ergreifen und/oder Umgreifen durch einen Bediener vorgesehenen Handgriffabschnitt 12, der an einem Antriebsabschnitt 13 des Maschinengehäuses 11 angeordnet ist. Der Handgriffabschnitt 12 steht beispielsweise winkelig, insbesondere etwa rechtwinkelig, von dem Antriebsabschnitt 13 ab. Die Werkzeugmaschine 10 kann vom Bediener am Handgriffabschnitt 12 ergriffen werden, um ein Werkstück W zu bearbeiten, beispielsweise zu schleifen, zu polieren oder dergleichen.

Neben dem Handgriffabschnitt 12 erstreckt sich ein Abluftabschnitt 14 des Maschinengehäuses 11 mit einem Abluftkanal 16, der an einem Absauganschluss 15 ausmündet. Über den Absauganschluss 15 können Partikel, die beim Betrieb der Werkzeugmaschine 10 entstehen, aus dem Maschinengehäuse 11 austreten. An den Absauganschluss 15 kann beispielsweise ein Saugschlauch angeschlossen werden.

Der Abluftabschnitt 14 und der Handgriffabschnitt 12 sind an ihren jeweiligen Längsendbereichen durch einen Verbindungsabschnitt 12A sowie den Antriebsabschnitt 13 miteinander verbunden.

Weiterhin ist an dem Maschinengehäuse 11 ein Versorgungsanschluss 18, beispielsweise zum Anschluss eines Netzkabels zum Anschluss an ein elektrisches Versorgungsnetz, zum Beispiel ein elektrisches Wechselstromnetz von 110 V oder 220-240 V, vorgesehen. Ergänzend oder alternativ zum Versorgungsanschluss 18 kann aber auch beispielsweise ein Anschluss für einen Energiespeicher, beispielsweise einen elektrischen Akkumulator, vorgesehen sein. Ferner kann beispielsweise im Handgriffabschnitt 12 ein Aufnahmeraum für einen schematisch angedeuteten elektrischen Energiespeicher 18A, zum Beispiel eine elektrische Batterie, vorgesehen sein, mit der die Werkzeugmaschine 10 mit elektrischem Strom versorgbar ist. An einer vom Handgriffabschnitt 12 abgewandten Vorderseite der Handwerkzeugmaschine 10 ist ein Schalter 17 zum Einschalten oder Ausschalten der Werkzeugmaschine 10 angeordnet. Der Schalter 17 ist beispielsweise mit einer Bestromungseinrichtung 19 zum Bestromen eines Antriebsmotors 20 elektrisch verbunden.

Beispielsweise ist der Antriebsmotor 20 ein elektronisch kommutierter Motor, wobei ohne weiteres auch andere elektrische oder pneumatische Motor-Typen möglich sind, beispielsweise Universalmotoren, Lamellenmotoren oder dergleichen.

Der Antriebsmotor 20 weist einen Stator 21 mit einer Erregerspulenanordnung auf, die durch die Bestromungseinrichtung 19 bestrombar ist.

Der Antriebsmotor 20 bildet einen Bestandteil eines Antriebsstrangs 8, der eine Werkzeugwelle 23 umfasst. Die Werkzeugwelle 23 ist beim Antriebsstrang 8 gleichzeitig eine Motorwelle 24 des Antriebsmotors 20, d.h. eine Welle, an der der Rotor 22 angeordnet ist.

Die Motorwelle 24 oder Werkzeugwelle 23 ist in ihrem oberen Längsbereich 25A mit einem Lager 28 sowie an ihrem unteren Längsendbereich 25B einem Lager 29 einer Lageranordnung 27 bezüglich eines Antriebsträgers 80 drehbar gelagert. Der Antriebsträger 80 ist mit dem Maschinengehäuse 11 z.B. fest verbunden oder ein fester Bestandteil des Maschinengehäuses 11. Der Antriebsträger 80 kann beispielsweise unmittelbar fest an dem Maschinengehäuse 11 angeordnet sein. Am Maschinengehäuse kann aber auch eine Halterung 95 für den Antriebsträger 80 vorgesehen sein, beispielsweise in den Innenraum des Maschinengehäuses 11 vorstehende Träger, die fest mit dem Maschinengehäuse 11 verbunden sind oder ein Bestandteil desselben bilden.

An dem unteren Längsendbereich 25B der Motorwelle 24 oder Werkzeugwelle 23 ist ein Befestigungsabschnitt 26, beispielsweise eine Befestigungsaufnahme, für ein Werkzeugaufnahmeteil 30 des Antriebsstrangs 8 vorgesehen. Das Werkzeugaufnahmeteil 30 weist einen Befestigungsabschnitt 32, beispielsweise einen Befestigungsvorsprung, auf, der mit dem Befestigungsabschnitt 26 verbunden ist, beispielsweise in diesen eingepresst, eingeschraubt oder dergleichen. Somit ist also die Werkzeugwelle 23 zweiteilig und umfasst die Motorwelle 24 sowie eine Werkzeugaufnahmewelle 31, die einen Bestandteil des Werkzeugaufnahmeteils 30 bildet.

Selbstverständlich ist (anders als in der Zeichnung dargestellt) auch eine einstückige Werkzeugwelle möglich, d.h. dass beispielsweise die Motorwelle 24 und das Werkzeugaufnahmeteil 30 und damit auch die Werkzeugaufnahmewelle 31 einstückig sind. In diesem Fall könnte beispielsweise der nachfolgend noch erläuterte Führungskörper 51 zweiteilig sein, so dass er seitlich an die somit einteilige Motorwelle angebracht werden kann.

An dem Werkzeugaufnahmeteil 30 ist eine Werkzeuglageraufnahme 33 für ein Werkzeuglager 34 vorgesehen, beispielsweise ein Gleitlager, Wälzlager oder dergleichen. Bevorzugt ist das Werkzeuglager 34 ein Wälzlager, insbesondere ein Rollenlager oder Kugellager.

Die Motorwelle 24 bzw. der obere Abschnitt der Werkzeugwelle 23 dreht um eine Motor-Drehachse MD, die nachfolgend vereinfacht als Drehachse bezeichnet wird, während die Werkzeugaufnahme 34 um eine Werkzeugdrehachse WD dreht. Die Werkzeugdrehachse WD ist um eine Exzentrizität E exzentrisch zu der (Motor-) Drehachse MD, so dass die Werkzeugaufnahme 34 mit einer Exzentrizität bezüglich der Drehachse MD drehbar gelagert ist. Insoweit bildet also das Werkzeuglager 34 ein Exzenterlager. Die Werkzeuglageraufnahme 33 ist dementsprechend exzentrisch bezüglich der (Motor-) Drehachse MD angeordnet.

An dem Werkzeuglager 34 oder Exzenterlager ist eine Werkzeugaufnahmewelle 36 gehalten, welches um die Werkzeugdrehachse WD drehbar bezüglich der Motorwelle 24 bzw. der Werkzeugaufnahmewelle 31 dreht. An der Werkzeugaufnahmewelle 36 ist die Werkzeugaufnahme 34 vorgesehen, beispielsweise eine Schraubaufnahme, eine Bajonettaufnahme oder dergleichen andere Befestigungsmöglichkeit für ein Arbeitswerkzeug 40, welches an der Werkzeugaufnahme 34 befestigbar ist. Beispielsweise ist das Arbeitswerkzeug 40 anhand eines Befestigungselements 37 in Gestalt einer Schraube mit der Werkzeugaufnahme 35 verbunden bzw. an dieser montiert. Ein Stützkörper 38, beispielsweise eine Unterlegscheibe, kann zwischen dem Befestigungselement 37 und einem Befestigungsabschnitt 45 des Arbeitswerkzeugs 40 vorgesehen sein.

Das Arbeitswerkzeug 40 ist vorzugsweise ein Tellerwerkzeug, beispielsweise ein Schleifteller, Polierteller oder dergleichen. Der Befestigungsabschnitt 45 ist an einem Trägerkörper 43 des Arbeitswerkzeugs 40 vorgesehen. Der Trägerkörper 43 ist vorzugsweise plattenartig oder tellerartig und trägt eine Plattenkörper 41, beispielsweise aus Schaumstoff oder elastischem Material, an dem eine Arbeitsfläche 42, beispielsweise eine Schleiffläche, Polierfläche oder dergleichen vorgesehen ist. Die Arbeitsfläche 42 kann aber auch eine Befestigungsfläche für ein Schleifmittel, Poliermittel oder dergleichen, darstellen.

Eine von dem Plattenkörper 41 bzw. der Arbeitsfläche 42 abgewandte Oberfläche 44 des Trägerkörpers 43 bildet eine Bremsoberfläche, anhand derer eine Drehung des Arbeitswerkzeugs 40 anhand einer Bremseinrichtung 47 bremsbar ist. Die Bremseinrichtung 47 umfasst beispielsweise eine am Maschinengehäuse 11 ortsfest befestigte Manschette 48, deren dem Trägerkörper 43 oder Arbeitswerkzeug 40 zugewandte Seite an der Oberfläche 44 entlang schleift, so dass das Arbeitswerkzeug 40 gebremst wird. In die Manschette 48 sind vorzugsweise Verstärkungskörper eingesetzt, beispielsweise aus Metall. Die Manschette 48 besteht beispielsweise aus Gummi oder dergleichen anderem nachgiebigem Material, so dass sie elastisch nachgiebig an der Oberfläche 44 anliegt.

An der Arbeitsfläche 42 sowie dem Plattenkörper 41 sind eine oder mehrere Durchlassöffnungen 46 für Staub vorgesehen, der beim Betrieb des Arbeitswerkzeugs 40, d.h. bei einem Entlangschleifen an einem Werkstück W, entsteht. Die mindestens eine Durchlassöffnung 46 kommuniziert mit einem durch die Manschette 48 umschlossenen Innenraum, der seinerseits wiederum mit dem Abluftkanal 26 strömungstechnisch verbunden ist, so dass Staub, der im Bereich der Arbeitsfläche 42 entsteht, durch die Durchlassöffnungen 46 hindurch zum Absauganschluss 15 strömen kann.

Wenn der Antriebsmotor 20 die Werkzeugaufnahme 35 antreibt und somit das Arbeitswerkzeug 40 rotiert, entstehen Schwingungen, die den Bediener, der den Handgriffabschnitt 12 umgreift, belasten. Derartige Schwingungen sind also unerwünscht. Zur Abhilfe ist die nachfolgend erläuterte Wuchteinrichtung 50 vorgesehen.

Die Wuchteinrichtung 50 umfasst einen Führungskörper 51, der an der Werkzeugwelle 23 vorgesehen ist. Die Wuchteinrichtung 50 umfasst einen Führungskörper 51 mit einer ersten Umlaufbahn 52 und einer zweiten Umlaufbahn 53, Die in Bahnausnehmungen 60 und 61 des Führungskörpers 51 vorgesehen sind. Der Führungskörper 51 ist beispielsweise in der Art eines Tellers oder einer Scheibe ausgestaltet.

Die Bahnausnehmungen 60, 61 sind an einem Grundkörper 56 des Führungskörpers 51 vorgesehen. Der Grundkörper 56 ist einstückig an dem Werkzeugaufnahmeteil 30 vorgesehen. Somit bildet also das Werkzeugaufnahmeteil 30 integral den Führungskörper 51 bzw. weist die Bahnausnehmungen 60, 61 auf.

In den Umlaufbahnen 52, 53 sind Wuchtkörper 54, 55 aufgenommen, beispielsweise Kugeln, Rollen, Walzen oder dergleichen. Bei einer Rotation des Führungskörpers 51 um die Drehachse MD können die Wuchtkörper 54, 55 eine temporär ortsfeste Position bezüglich des Führungskörpers 51 einnehmen, insbesondere als Kompensation und/oder als Feintrimm für eine gezielt an dem Antriebsstrang 8 vorgesehene Wuchtmasse 39A.

Beispielsweise ist die Anzahl der Wuchtkörper 54,55 unterschiedlich, d. h. dass beispielsweise in der Umlaufbahn 52 weniger Wuchtkörper 54, zum Beispiel 4 Wuchtkörper 54, in der Umlaufbahn 53 mehr Wuchtkörper 55, zum Beispiel 8 Wuchtkörper 55, angeordnet sind.

Der Führungskörper 51 weist einen Lagerabschnitt 57 auf, der im Bereich der Werkzeuglageraufnahme 33 vorgesehen ist. Die Umlaufbahnen 52, 53 erstrecken sich um die Werkzeuglageraufnahme 33 herum, so dass gerade im Bereich des Werkzeuglagers 34 eine optimale Auswuchtung gegeben ist.

Der Führungskörper 51 umfasst eine Deckwand 58 an seiner von der Werkzeugaufnahme 35 abgewandten Stirnseite, d.h. an einer dem Antriebsmotor 20 zugewandten Seite des Führungskörpers 51. Die obere Wand oder Deckwand 58 geht in eine Außenumfangswand 66 über, an der eine Stufe 67 vorgesehen ist.

An dem Führungskörper 51, z.B. im Bereich der Stufe 67, sind Lüfterschaufeln 69 eines Lüfterrads 68 vorgesehen, welches integral durch den Führungskörper 51 gebildet ist. Die Lüfterschaufeln 69 sind am radial äußeren Randbereich bezüglich der Drehachse MD des Führungskörpers 51 vorgesehen und erzeugen einen Luftstrom, der zur Kühlung des Antriebsmotors 20 geeignet ist.

Die Umlaufbahnen 52, 53 weisen radial äußere Wände 63A, 63B auf, die als Ringbahnen 64 für die Wuchtkörper 54, 55 ausgestaltet sind. Beispielsweise weisen die Ringbahnen 64 eine hohlkugelige Führungskontur oder Führungsfläche für die Wuchtkörper 54, 55 auf.

Weiterhin sind an den Bahnausnehmungen 60, 61 des Führungskörpers 51 obere Seitenwände 65 vorgesehen sowie bei der Bahnausnehmung 60 zudem noch eine radial innere Wand 62.

Die Bahnausnehmungen 60, 61 sind durch einen Deckel 70 verschlossen. Der Deckel 70 verschließt die Bahnausnehmungen 60, 61 jeweils mit einer unteren Seitenwand 75, wobei er für die Bahnausnehmung 61 auch noch eine radial bezüglich der Drehachse D innen verschließende Wand 72 bereitstellt.

Durch den Deckel 70 sind die Wuchtkörper 54, 55 in den Umlaufbahnen 52, 53 derart gehalten, dass keine Wuchtkörper 54 in die Umlaufbahn 53 und kein Wuchtkörper 55 in die Umlaufbahn 52 gelangen kann.

In den Bahnausnehmungen 60, 61 und somit den Umlaufbahnen 52, 53 sind Dämpfungsfluide L1 und L2, beispielsweise Öle unterschiedlicher Qualität, insbesondere unterschiedlicher Viskosität, aufgenommen. Der Deckel 70 verschließt die Umlaufbahnen 52, 53 derart dicht, dass die Dämpfungsfluide L1 und L2 in den Bahnausnehmungen 60, 61 eingekammert ist und nicht aus diesen heraus gelangen kann.

Optional können beispielsweise zwischen dem Deckel 70 und dem Führungskörper 150 noch Dichtungen 74, insbesondere O-Ringe, Gummidichtungen, dichtende Beschichtungen des Deckels 70 und/oder des Führungskörpers 150 im Bereich von Flächen, mit denen der Deckel 70 und der Führungskörper 150 aneinander anliegen, oder dergleichen andere Dichtungsanordnung vorgesehen sein, die für eine zusätzliche Fluid-Dichtigkeit sorgen.

Die Wand 72 ist an einem Vorsprung 71 des Deckels 70 vorgesehen, der in eine korrespondierende Aufnahme am Führungskörper 51 eingreift. Die Seitenwand 75 zum Verschließen der Bahnausnehmung 71 wird durch einen Ringwandabschnitt 73 bereitgestellt, der sich um den Vorsprung 71 herum erstreckt.

Zur Befestigung des Deckels 70 sind Befestigungsmittel 76, z.B. Schrauben oder dergleichen, vorgesehen, die den Deckel 70 durchdringen und in nicht näher bezeichnete Schraubaufnahmen am Führungskörper 51 eingeschraubt sind.

Die erste Umlaufbahn 52 weist einen Radius R1 bezüglich der Drehachse MD auf, der kleiner ist als ein Radius R2 der zweiten Umlaufbahn 53. Die erste Umlaufbahn 52 und die zweite Umlaufbahn 53 sind im Bereich der Stufe 67 vorgesehen.

Da die Umlaufbahnen 52, 53, nämlich insbesondere die radial äußeren Wände 63A, 63B einstückig am Grundkörper 56 vorgesehen sind, ist eine hohe Maßgenauigkeit gegeben.

Insbesondere ist es vorteilhaft, wenn der Grundkörper 56 in einer schematisch dargestellten Werkstückhalterung WH aufgespannt oder gehalten ist und bleibt, um die Umlaufbahnen 52, 53 herzustellen, beispielsweise durch eine Drehbearbeitung anhand eines spanenden Bearbeitungswerkzeugs DZ, beispielsweise eines Drehwerkzeugs, insbesondere eines sogenannten Drehmeißels.

Weiterhin ist es vorteilhaft, wenn in der Werkstückhalterung WH bzw. derselben Aufspannung des Grundkörpers 56 nicht nur die Umlaufbahnen 52, 53, sondern auch der Befestigungsabschnitt 32, mithin also der wellenförmige Vorsprung des Befestigungsabschnittes 32, hergestellt wird. Somit weisen die Umlaufbahnen 52, 53 einen idealen, gleichen Radius bezüglich der Drehachse MD auf.

An dem Führungskörper 51 sind zudem Wuchtmassen 39A, 39B ortsfest angeordnet.

Die Wuchtmasse 39A ist an der von der Werkzeugaufnahme 35 abgewandten und dem Antriebsmotor 20 zugewandten Seite des Führungskörpers, insbesondere dessen Stirnseite, angeordnet. Die Wuchtmasse 39A ist beispielsweise im Bereich des Lagerabschnitts 52 befestigt, insbesondere angeschraubt.

Die Wuchtmasse 39B ist an der der Werkzeugaufnahme 35 bzw. dem Arbeitswerkzeug 40 zugewandten Seite des Führungskörpers 51 angeordnet, insbesondere am Deckel 70. Beispielsweise ist die Wuchtmasse 39B am Deckel 70 vorgesehen. Sie kann einen Bestandteil des Deckels 70 bilden oder wie beim Ausführungsbeispiel anhand einer Schraube 39C oder einem jeweiligen anderen Befestigungsmittel, beispielsweise einer Verklebung oder dergleichen, am Deckel 70 befestigt sein. Die Wuchtmasse 39B ist mit maximalem radialem Abstand bezüglich der Drehachse MD am Führungskörper 51 befestigt und kann so eine optimale Unwucht erzeugen, die durch die Wuchtkörper 54, 55 kompensierbar ist.

Der Antriebsträger 80 kann jedoch gegenüber der Halterung 95 auch beweglich gelagert sein, so dass er beispielsweise parallel und/oder quer zur Motor-Drehachse MD beweglich ist. Beispielsweise ist zwischen dem Antriebsträger 80 und der Halterung 95 eine Federanordnung 90 mit einem oder mehreren Federelementen 91, 92 angeordnet. Die Federelemente 91, 92 können beispielsweise Schraubenfedern, Torsionsfedern oder dergleichen umfassen. Die Federelemente 91 stützen den Antriebsträger 80 bezüglich der Halterung 95 quer zur Drehachse MD, während die Federelemente 92 den Antriebsträger 80 bezüglich der Halterung 95 parallel oder mit einer Bewegungsrichtung parallel zur Drehachse MD abstützen. Die Federelemente 91, 92 können unterschiedliche Federeigenschaften aufweisen, beispielsweise unterschiedliche Federkonstanten oder dergleichen, sodass beispielsweise Bewegungen des Antriebsträgers 80 bezüglich der Halterung 95 parallel zur Drehachse MD mit größerer Federkraft abgefedert sind als Bewegungen quer zur Drehachse MD, d. h. dass beispielsweise die Federelemente 91 eine kleinere Federsteifigkeit aufweisen als die Federelemente 92.

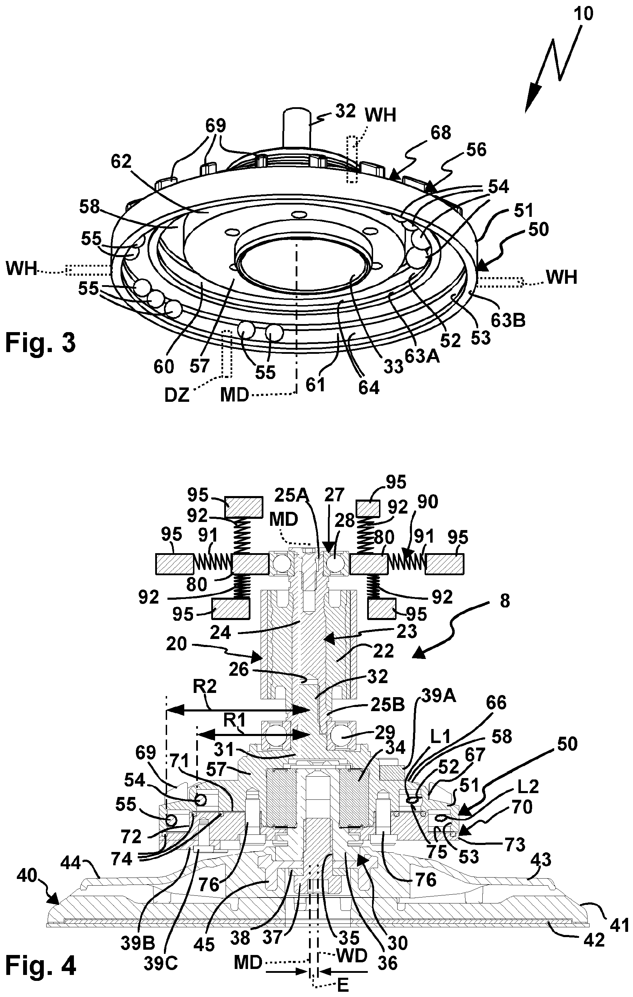

Zur Vereinfachung ist die Ausführungsform mit der Federanordnung 90 in Figur 4 schematisch angedeutet und nur beim Lager 28 vorgesehen. In der Zeichnung nicht dargestellt ist eine weitere bewegliche Lagerung, insbesondere Halterung mit der Federanordnung 90 des Antriebsträgers 80 bezüglich der Halterung 95 im Bereich des Lagers 29.

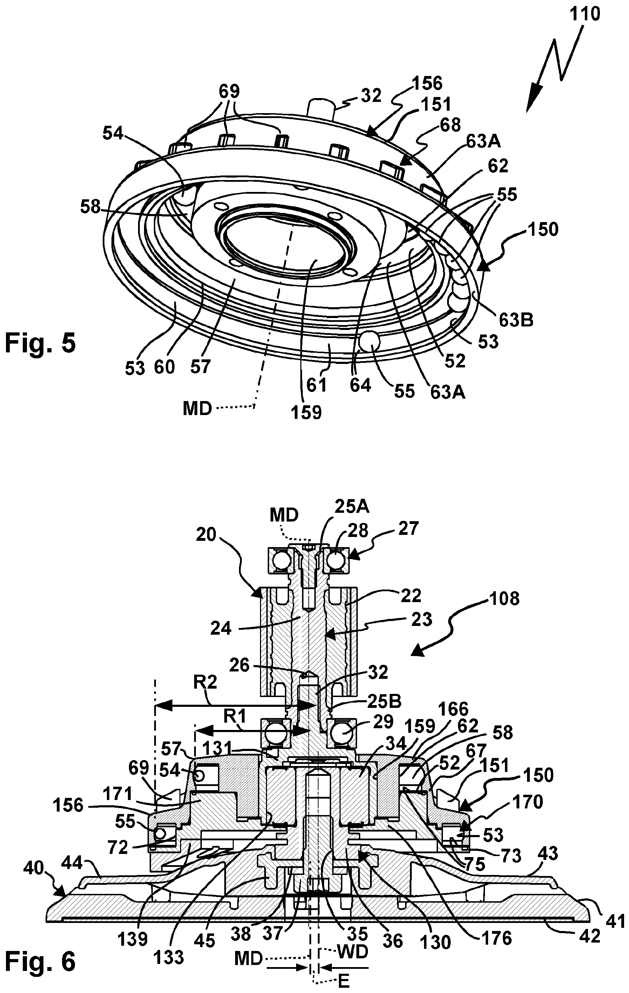

Bei den in den Figuren 5 und 6 sowie 7 und 8 dargestellten Antriebssträngen 108 und 208 von Werkzeugmaschinen 110 und 210 wäre ein derartiges Lagerkonzept des jeweiligen Antriebsträgers 80 bezüglich der Halterung 95 ebenfalls möglich. Jedenfalls sind die Antriebsstränge 108 und 208 äquivalent zum Antriebsstrang 8 im Maschinengehäuse 11 aufgenommen, d.h. sie können anstelle des Antriebsstranges 8 vorgesehen sein.

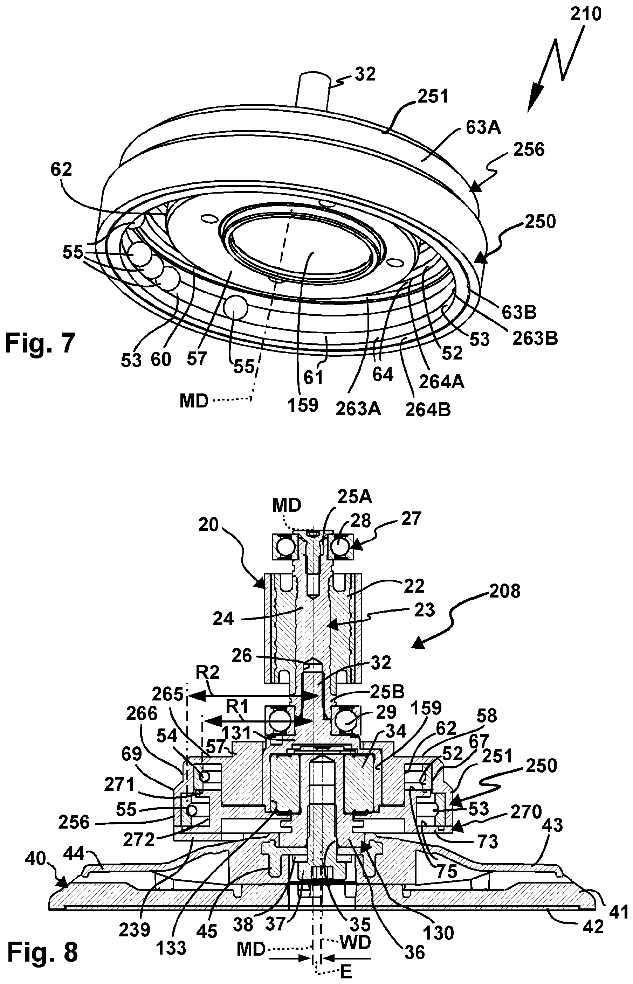

Gleiche oder gleichartige Komponenten der Antriebsstränge 108 und 208, die schon in Zusammenhang mit dem Antriebsstrang 8 beschrieben worden sind, sind in der Zeichnung mit denselben Bezugszeichen versehen und werden nicht näher erläutert. Insbesondere weisen die Antriebsstränge 108 und 208 die bereits erläuterte Motorwelle 24 einschließlich des Antriebsmotors 20 und dessen Komponenten auf und sind mit den Lagern 28 und 29 der Lageranordnung 95 am Antriebsträger 80 drehbar gelagert. Mit den Antriebssträngen 108 und 208 ist das Arbeitswerkzeug 40 jeweils drehantriebbar, welches ebenfalls nicht näher erläutert wird. Ebenso ist die Bremseinrichtung 47 optional vorgesehen, die in der Zeichnung der Figuren 6 und 8 ebenfalls nicht dargestellt ist.

Beim Antriebsstrang 108 ist ein Werkzeugaufnahmeteil 130 vorgesehen, welches eine Werkzeugaufnahmewelle 131 umfasst. Die Werkzeugaufnahmewelle 131 ist mit dem bereits erläuterten Befestigungsabschnitt 32 am Befestigungsabschnitt 26 der Motorwelle 24 gehalten und weist integral eine Werkzeuglageraufnahme 133 für das Werkzeuglager 34, also das Exzenterlager, auf.

An der Werkzeugaufnahmewelle 131 ist eine Wuchteinrichtung 150 mit einem Führungskörper 151 angeordnet, der als von der Werkzeugaufnahmewelle 131 separates Bauteil ausgestaltet ist.

Ähnlich wie der Führungskörper 51 weist auch der Führungskörper 151 eine erste und eine zweite Umlaufbahn 52, 53 auf, in denen Wuchtkörper 54, 55, beispielsweise Kugeln, gelagert sind. Eine Außenumfangswand 166 des Führungskörpers 151 weist ebenfalls eine Stufe 67 auf, die sich dadurch ergibt, dass die Umlaufbahn 52 einen kleineren Radius R1 als die zweite Umlaufbahn 53 aufweist, die nämlich den Radius R2 hat. Die Wuchtkörper 54 in der zweiten Umlaufbahn mit dem größeren Radius R2 dienen wie bei der Wuchteinrichtung 50 sozusagen zur Grobabstimmung oder zum Grob-Trimm, während die Wuchtkörper 54 in der ersten Umlaufbahn 52, also mit dem kleineren Radius R1, eine Art Fein-Trimm darstellen.

Der Führungskörper 151 ist durch einen Deckel 170 verschlossen, der einen Vorsprung 171 aufweist, der von der vom Antriebsmotor 20 abgewandten Seite in den Führungskörper 151 eingreift. Die Umlaufbahnen 52, 53 weisen radial äußere Wände 63A, 63B auf, die integral am Führungskörper 151 vorgesehen sind. Auch eine obere Seitenwand 65 ist an dem Führungskörper 151 vorgesehen, die sozusagen unterseitig durch den Deckel 170 bzw. den Vorsprung 171 des Deckels 170 verschlossen werden. Während die Umlaufbahn 52 mit dem kleineren Radius R1 nur von der der oberen Seitenwand 65 gegenüberliegenden Seite durch den Deckel 170 verschlossen ist, der dementsprechend eine untere Seitenwand 75 dafür bereitstellt, ist die zweite Umlaufbahn 53 mit dem größeren Radius nicht nur durch eine untere Seitenwand 75, die durch einen Ringwandabschnitt 73 des Deckels 170 bereitgestellt wird, sondern auch durch eine radial innere Wand 72 verschlossen.

An dem Führungskörper 151, nämlich dessen Deckel 170, ist integral eine Wuchtmasse 139 vorgesehen. Die Wuchtmasse 139 ist exzentrisch zur Motordrehachse MD ortsfest am Deckel 170 und somit am Führungskörper 151 angeordnet, an dem der Deckel 70 ortsfest angeordnet ist. Der Deckel 171 stellt also in Bezug auf die (Motor-) Drehachse MD sozusagen eine exzentrische statische Unwucht da, während die dynamische Auswuchtung anhand der Wuchteinrichtung 150 und mithin die Wuchtkörper 54, 55 in den Umlaufbahnen 52 und 53 des Führungskörpers 151 geleistet wird.

Wiederum ist eine hohe Genauigkeit in Bezug auf die radialen Verläufe der Bahnausnehmungen 60, 61, insbesondere der radial äußeren Wände 63A, 63B des Führungskörpers 151 gewährleistet, weil nämlich beide Umlaufbahnen 52 und 53 im Betriebszustand des Führungskörpers 151, wenn sich dieser nämlich um die (Motor-) Drehachse MD dreht, die jeweiligen Führungskonturen bereitstellen, nämlich die Ringbahnen 64 an den radial äußeren Wänden 63A, 63B. Die radialen Verläufe der Bahnausnehmungen 60, 61 können ähnlich wie im Zusammenhang mit Figur 3 dargestellt hergestellt sein, indem beispielsweise der Grundkörper 156 am Werkstückhalter WH verbleibt, bis zumindest die radial äußeren Verläufe der Bahnausnehmungen 60, 61 hergestellt sind, bevorzugt die gesamten Bahnausnehmungen 60, 61.

Dieses Konzept des sozusagen maßgenau hergestellten Führungskörpers 151 realisiert auch der Führungskörper 251 einer Wuchteinrichtung 250 des Antriebsstrangs 208. Der Führungskörper 251 weist wie der Führungskörper 151 eine Wellenaufnahme 159 zur Aufnahme der Werkzeugaufnahmewelle 131 auf, so dass in Bezug auf diese Ausführungsform auf die vorstehenden Ausführungen Bezug genommen wird. Gleich oder gleichartige Bauteile bzw. Komponenten der Führungskörper 251, 151 sind mit denselben Bezugsziffern versehen. Allerdings weist der Führungskörper 251 anders als der Führungskörper 151 keine Lüfterschaufel 63 auf (was aber ohne weiteres möglich wäre), so dass er kein Lüfterrad 68 darstellt.

Eine Außenumfangswand 266 des Führungskörpers 251 weist ebenfalls eine Stufe 67 auf, die sozusagen radial außen den Verlauf der Bahnausnehmungen 60, 61 der Umlaufbahnen 52, 53 der Wuchteinrichtung 50 darstellen. Die Umlaufbahnen 52, 53 haben nämlich einen kleineren Radius R1 bzw. größeren Radius R2, wobei die Radien im Unterschied zu den vorgenannten Ausführungsbeispielen weniger voneinander differieren. Der Führungskörper 251 ist durch einen Deckel 270 verschlossen, der bezüglich der Ausnehmungen 60 und 61 jeweils eine untere Seitenwand 75 bereitstellt und in Bezug auf die radial weiter auskragende Bahnausnehmung 161 zudem noch eine obere Seitenwand 271 sowie eine radial innere Wand 272.

An radial äußeren Wänden 63A, 63B des Führungskörper 251 könnten integral Ringbahnen 64 vorgesehen sein, beispielsweise durch eine Drehbearbeitung hergestellte Ringbahnen oder dergleichen. Vorliegend sind die Ringbahnen 64 jedoch an Ringkörpern 264A, 264B vorgesehen, die in den Bahnausnehmungen 60, 61 angeordnet sind und sich an den radial äußeren Wänden 63A, 63B des Führungskörpers 251 abstützen. Somit sind also die Ringbahnen 64 an radial äußeren Wänden 263A, 263B der Ringkörper 264A, 264B vorhanden. Die Ringkörper 264A, 264B sind beispielsweise aus Hartmetall oder dergleichen anderem geeigneten Material, so dass sie beispielsweise besonders reibungsarm die Wuchtkörper 54, 55 lagern können.

An dem Deckel 270 ist eine Wuchtmasse 239, beispielsweise eine plattenförmige Wuchtmasse 239, exzentrisch zur (Motor-) Drehachse MD angeordnet, beispielsweise im Bereich des Ringwandabschnittes 73.

Die Antriebsstränge 8, 108, 208 sind vorzugsweise bei einer als Hand-Werkzeugmaschine ausgestalteten Werkzeugmaschine 10, 110, 210 vorgesehen.

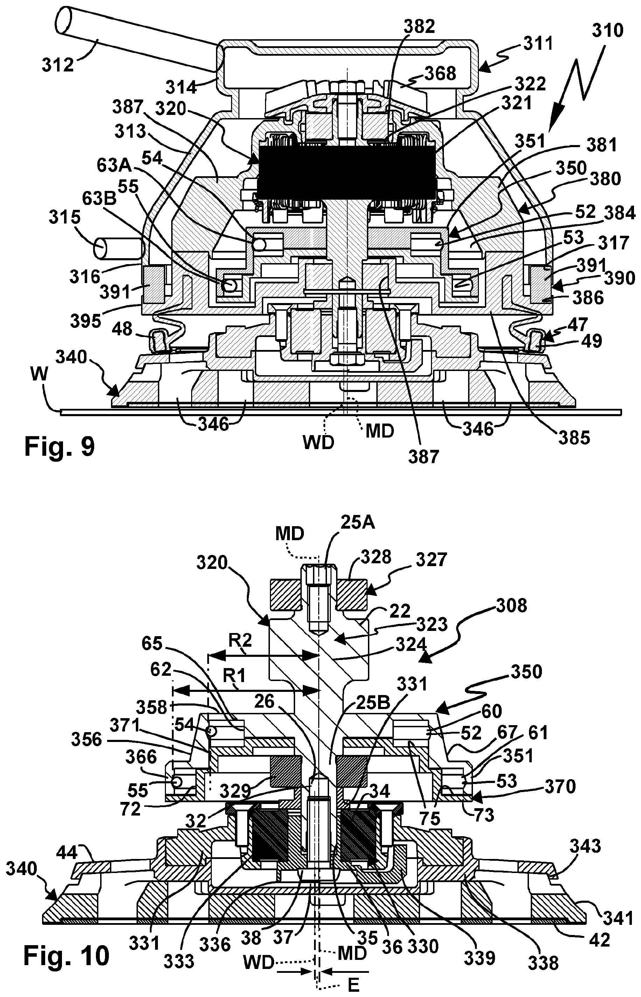

Der in den Figuren 9 und 10 dargestellte Antriebsstrang 308 einer Werkzeugmaschine 10 kann ein Bestandteil einer Hand-Werkzeugmaschine bilden, wenn nämlich beispielsweise an einem Maschinengehäuse 311 der Werkzeugmaschine 310 ein Handgriff 312 angeordnet ist, insbesondere ein stabförmiger Handgriff.

Das Maschinengehäuse 311 weist einen Antriebsabschnitt 313 auf, an dessen einen Endbereich ein Arbeitswerkzeug 340, beispielsweise ein Tellerwerkzeug, angeordnet ist. Zwischen dem Maschinengehäuse 311 und dem Arbeitswerkzeug 340 ist die bereits erläuterte Bremseinrichtung 47 mit ihrer Manschette 48 und den Verstärkungskörpern 49 angeordnet, die an einer Bremsoberfläche 44 eines Trägerkörpers 343 des Arbeitswerkzeugs 340 entlang gleitet.

Das Arbeitswerkzeug 340 weist einen Plattenkörper 341, beispielsweise ein Schleifpad oder dergleichen, auf, an dem mehrere Durchlassöffnungen 346 vorgesehen sind, durch die mit Staub beladene Luft in einen Staubabfuhrraum gelangen kann, der durch die Manschette 48 begrenzt ist und der mit einem Abluftanschluss in der Art des Absauganschlusses 15 (in der Zeichnung nicht sichtbar) strömungsverbunden ist.

Im Unterschied zu den Antriebssträngen 8 - 208 ist beim Antriebsstrang 308 eine Motorwelle 324 eines Antriebsmotors 320 vorgesehen, an der ein Führungskörper einer Wuchteinrichtung, nämlich ein Führungskörper 351 einer Wuchteinrichtung 350, angeordnet ist. Mithin ist also die Wuchteinrichtung 350 ein Bestandteil der Motorwelle 324.

Die Motorwelle 324 ist an ihren Längsendbereichen 25A, 25B an Lagern 328, 329 einer Lageranordnung 327 drehbar gelagert. Zwischen den Lagern 328, 329 sind der Führungskörper 351 und somit die Wuchteinrichtung 350 angeordnet. Somit befindet sich also die Wuchteinrichtung 350 zwischen den Lagern einer Werkzeugwelle 323, deren Bestandteil die Motorwelle 324 bildet, während bei den obigen Ausführungsbeispielen die jeweilige Wuchteinrichtung oder der Führungskörper seitlich neben den Lagern der Lageranordnung angeordnet ist, mit denen der Antriebsstrang am jeweiligen Antriebsträger drehbar gelagert ist.

An dem Längsendbereich 25A der Motorwelle 324 ist ein Lüfterrad 368 angeordnet, welches sich in den Abluftabschnitt 314 des Maschinengehäuses 311 hinein erstreckt.

Der Antriebsmotor 320 weist einen Rotor 322 auf, der an der Motorwelle 324 angeordnet ist und sich im Innenraum eines Stators 321 befindet. Vor den Stator 321 steht der Längsendbereich 25B vor, der am Lager 329 abgestützt ist. Das Lager 329 befindet sich im Innenraum des Führungskörpers 351, der sich sozusagen glockenartig über das Lager 329 erstreckt. Der Führungskörper 351 weist Umlaufbahnen 52, 53 mit kleineren und größeren Radien auf, in denen Wuchtkörper 54, 55, beispielsweise Kugeln, Gleitkörper oder dergleichen, beweglich aufgenommen sind. Eine Außenumfangswand 366 des Führungskörpers 351 weist beispielsweise eine konische oder stufige Gestalt auf. Der Führungskörper 351 ist durch einen Deckel 370 verschlossen, der beispielsweise die bereits erläuterten Seitenwände 75 für die Bahnausnehmungen 60, 61, die am Führungskörper 351 vorgesehen sind, aufweist. Die Bahnausnehmung 60 weist sowohl eine radial äußere Wand 63A, 63B für die Bahnausnehmung 60, 61 auf als auch eine jeweilige obere Seitenwand 65. In den radial äußeren Wänden 63A, 63B sind Ringbahnen für die Wuchtkörper 54, 55 vorgesehen.

An einem Befestigungsabschnitt 26 der Motorwelle 324 ist ein Befestigungsabschnitt 32 eines Werkzeugaufnahmeteils 330 gehalten, zum Beispiel eingesteckt, eingepresst, eingeschraubt oder dergleichen. Das Werkzeugaufnahmeteil 330 weist eine Werkzeuglageraufnahme 333 für ein Werkzeuglager 34 auf. An dem Werkzeuglager 34 ist eine Werkzeugaufnahmewelle 336 mit einer Werkzeugaufnahme um eine Werkzeugdrehachse WD drehbar gelagert, die eine Exzentrizität E bezüglich der Motordrehachse MD aufweist.

An der Werkzeugaufnahme 35 ist das Arbeitswerkzeug 340 anhand eines Befestigungselements 37, beispielsweise einer Schraube, gehalten.

Die Werkzeugaufnahmewelle 336 weist beispielsweise einen Stützkörper 338 auf, an dem das Arbeitswerkzeug 340 abgestützt ist. Der Stützkörper 338 ist beispielsweise plattenförmig.

Eine Wuchtmasse 339 ist im Unterschied zu den vorigen Ausführungsbeispielen nicht am Führungskörper der jeweiligen Wuchteinrichtung angeordnet, sondern an der Werkzeugaufnahmewelle 336. Beispielsweise durchsetzt das Befestigungselement 37 einen Plattenkörper, der die Wuchtmasse 339 darstellt. Die Wuchtmasse 339 ist beispielsweise als ein Plattenelement, welches exzentrisch zur Motordrehachse MD ist, ausgestaltet.

Der Antriebsmotor 320 und der Führungskörper 351 sind an einem Antriebsträger 380 gehalten. Der Antriebsträger 380 weist einen Motorträger 381 auf, an dem das (in der Zeichnung obere) Lager 328 des Antriebsmotors 320 gehalten ist, nämlich an einer Lageraufnahme 382. Das Oberteil oder der Motorträger 381 ist beispielsweise glockenförmig. Jedenfalls erstreckt sich ein Seitenwandabschnitt 383 seitlich am Antriebsmotor 320, insbesondere dem Stator 321, vorbei und ist an seiner freien, von der Lageraufnahme 382 abgewandten Seite durch einen Deckel 385 des Antriebsträgers 380 verschlossen. Der Deckel 385 und der Motorträger 381 kammern einen Innenraum 384 ein, in dem der Führungskörper 351 drehbar gelagert ist.

An dem Deckel 385 ist eine Lageraufnahme 347 für das Lager 329 vorgesehen. Der Deckel 385 und der Motorträger 381 sind fest miteinander verbunden, so dass die beiden Lager 328, 329 steif im Antriebsträger 380 gehalten sind. Somit kann die Wuchteinrichtung 350 die Unwuchtsituation im Bereich des Antriebsträgers 380 optimal beseitigen, d.h. eine optimale Wuchtleistung bezüglich des Antriebsträgers 380 entfalten.

Dieser Effekt wird noch dadurch verstärkt, dass der Antriebsträger 380 nicht fest mit dem Maschinengehäuse 311 verbunden ist, sondern beweglich an diesem gelagert ist. Das Maschinengehäuse 311 stellt eine Halterung 395 für den Antriebsträger 380 dar, wobei der Antriebsträger 380 gegenüber der Halterung 395 beweglich gelagert ist, insbesondere mit einer Bewegungskomponente parallel und/oder einer Bewegungskomponente quer zur (Motor-) Drehachse MD.

Zwischen dem Antriebsträger 380 und der Halterung 395 ist eine Federanordnung 390 angeordnet. Die Federanordnung 390 umfasst Federelemente 391, beispielsweise Gummipuffer oder sonstige elastische Pufferelemente. Die Federelemente 391 sind vorzugsweise blockartig ausgestaltet. Die Federelemente 391 umfassen beispielsweise im Wesentlichen quaderförmige Elemente. Ohne weiteres könnte auch ein Federelement 391 in Gestalt beispielsweise eines Ringes vorgesehen sein, der einerseits am Maschinengehäuse 311 und somit an der Halterung 395, andererseits am Antriebsträger 380 abgestützt ist. Für das oder die Federelemente 391 ist an dem Maschinengehäuse 311 und somit der Halterung 395 mindestens eine Aufnahme 317 vorgesehen, beispielsweise eine Tasche, Ringnut oder dergleichen. Am Antriebsträger 380 ist für das mindestens eine Federelement 391 mindestens eine Aufnahme vorgesehen, nämlich eine Aufnahme 386, beispielsweise eine Tasche, Ringnut oder dergleichen. Die Aufnahmen 317, 386 liegen einander gegenüber.

Somit kann also der Antriebsträger 380 innerhalb des Maschinengehäuses 311 schwingen oder oszillieren, was die Wucht-Qualität der Wuchteinrichtung 350 erheblich erhöht. Diese Situation ist an sich schon vorteilhaft, wenn die Werkzeugmaschine 310 als Hand-Werkzeugmaschine betrieben wird, d.h. dass der Bediener beispielsweise unmittelbar das Maschinengehäuse 311 ergreift oder den Handgriff 312 nutzt. Besonders günstig erweist sich diese Technik in einer Situation, in der das Maschinengehäuse 311 biegesteif oder vibrationssteif gehalten ist, d.h. dass das Maschinengehäuse 311 gegenüber dem ortsfesten Bezugskörper keine oder nur geringe Beweglichkeit aufweist. Ein solcher Bezugskörper ist beispielsweise ein Positionierantrieb 315, mit dem die Werkzeugmaschine 311 entlang eines Untergrunds, beispielsweise dem Werkstück W, beweglich ist. Bei dem Positionierantrieb 315 handelt es sich beispielsweise um einen Antriebsmotor, ein Seilzuggetriebe oder dergleichen andere Positioniermittel, die am Maschinengehäuse 311 und somit an der Halterung 315 festgelegt sind, um die Halterung 395 relativ zu einer Fläche, die durch die Werkzeugmaschine 310 zu bearbeiten ist, zu bewegen. Der Positionierantrieb 315 ist schematisch dargestellt.

Auch bei den Führungskörpern 151, 251, 351 ist es vorteilhaft, wenn jeweiligen Umlaufbahnen 52, 53 an ein und demselben Grundkörper 156, 256, 356 angeordnet sind. Beim Führungskörper 351 ist es weiterhin zweckmäßig, dass auch die Motorwelle 324 und der Führungskörper 351 Bestandteile desselben Grundkörpers 356 sind. Insbesondere ist es vorteilhaft, wenn die jeweiligen Grundkörper 156, 256, 356 ebenso wie anhand des Grundkörpers 56 erläutert an dem Werkstückhalter WH verbleiben, bis beispielsweise jeweils beide Umlaufbahnen 52, 53 hergestellt sind. Beim Grundkörper 356 ist es weiterhin vorteilhaft, wenn die Motorwelle 324, insbesondere im Bereich der Lager 328, 329 und die Umlaufbahnen 52, 53 hergestellt werden, ohne dass der Grundkörper 356 vom Werkstückhalter WH entfernt wird.

## Patentansprüche

1. Werkzeugmaschine, nämlich Hand-Werkzeugmaschine (10) oder halbstationäre Werkzeugmaschine, mit einem Antriebsstrang (108), der eine an einem Antriebsträger (80) anhand einer Lageranordnung (27) drehbar gelagerte Werkzeugwelle (23) und eine an der Werkzeugwelle (23) angeordnete Werkzeugaufnahme (35) für ein insbesondere tellerartiges Arbeitswerkzeugs (40) aufweist, wobei die Werkzeugwelle (23) durch einen Antriebsmotor der Werkzeugmaschine (10) um eine Drehachse drehantreibbar ist, und wobei an der Werkzeugwelle (23) eine Wuchteinrichtung (50) angeordnet ist, die einen Führungskörper (51) mit mindestens einer um die Drehachse verlaufenden Umlaufbahn (52) und mindestens einen in der Umlaufbahn (52) beweglich gelagerten Wuchtkörper (54, 55) aufweist, wobei die mindestens eine an dem Führungskörper (51) angeordnete Umlaufbahn (52) eine erste Umlaufbahn (52) mit einem ersten radialen Abstand zu der Drehachse und in einem Längsabstand bezüglich der Drehachse zu der ersten Umlaufbahn (52) mindestens eine zweite Umlaufbahn (52, 53) umfasst, die einen gegenüber dem ersten radialen Abstand größeren zweiten radialen Abstand zu der Drehachse aufweist und von der ersten Umlaufbahn (52) getrennt ist, so dass die in der jeweiligen Umlaufbahn (52, 53) angeordneten Wuchtkörper (54, 55) zwischen den Umlaufbahnen (52, 53) unverstellbar und/oder käfigartig in ihrer jeweiligen Umlaufbahn (52, 53) gehalten sind, **dadurch gekennzeichnet, dass** die erste und die mindestens eine zweite Umlaufbahn (52, 53) mindestens zwei Umlaufbahnen (52, 53) umfassen oder bilden, in denen Wuchtkörper (54, 55) mit unterschiedlicher Geometrie und/oder unterschiedlichem Gewicht und/oder unterschiedlichen Gleiteigenschaften und/oder in unterschiedlicher Anzahl und/oder aus unterschiedlichen Materialien angeordnet sind, und dass der Führungskörper (51) nur einen einzigen Deckel (70) aufweist, mit dem die erste Umlaufbahn (52) und die zweite Umlaufbahn (53) verschlossen sind.

2. Werkzeugmaschine nach Anspruch 1, **dadurch gekennzeichnet, dass** der Führungskörper (51) einen Grundkörper (56) aufweist, an dem einstückig die erste und mindestens eine zweite Umlaufbahn (52, 53) ausgebildet sind, wobei vorteilhaft vorgesehen ist, dass die erste und die mindestens eine zweite Umlaufbahn (52, 53) durch eine spanende Bearbeitung des Grundkörpers (56) hergestellt sind, wobei der Grundkörper (56) insbesondere an einer Werkstückhalterung (WH) nach Abschluss der Herstellung der ersten Umlaufbahn (52) bis zum Beginn der Herstellung der mindestens zweiten Umlaufbahn (53) verbleibt.

3. Werkzeugmaschine nach einem der vorhergehenden Ansprüche, **dadurch gekennzeichnet, dass** der Führungskörper (51), insbesondere ein die Umlaufbahnen (52, 53) einstückig aufweisender Grundkörper (56) des Führungskörpers (51), und die Werkzeugwelle (23) einstückig sind, wobei der Grundkörper (56) vorteilhaft an einer Werkstückhalterung (WH) zur Herstellung der Werkzeugwelle (43) und der ersten Umlaufbahn (52) und/oder der mindestens zweiten Umlaufbahn (53) verbleibt, und/oder der Deckel (70) mindestens eine Umlaufbahn (52, 53) des Führungskörpers (51) parallel zu der Drehachse und/oder bezüglich der Drehachse radial innen verschließt.

4. Werkzeugmaschine nach einem der vorhergehenden Ansprüche, **dadurch gekennzeichnet, dass** mindestens eine Umlaufbahn (52, 53) des Führungskörpers (51) gegenüber der anderen Umlaufbahn (52, 53) oder den anderen Umlaufbahnen (52, 53) des Führungskörpers (51) vollständig verschlossen ist und/oder dass in mindestens zwei Umlaufbahnen (52, 53) des Führungskörpers (51) unterschiedliche Dämpfungsfluide (L1, L2) angeordnet sind und/oder dass von mindestens zwei Umlaufbahnen (52, 53) des Führungskörpers (51) nur eine Umlaufbahn (52, 53) ein Dämpfungsfluid aufweist und/oder dass den jeweiligen mindestens einen Wuchtkörper (54, 55) lagernde Oberflächen der ersten Umlaufbahn (52) und der mindestens einen zweiten Umlaufbahn (53) unterschiedliche Gleiteigenschaften und/oder unterschiedliche Geometrien aufweisen und/oder dass die Umlaufbahn (53) mit dem größten radialen Abstand zu der Drehachse näher bei der Werkzeugaufnahme (35) und/oder dem Arbeitswerkzeug (40) als die mindestens eine Umlaufbahn (52) mit einem kleineren radialen Abstand zu der Drehachse ist und/oder dass ein Längsabstand bezüglich der Drehachse zwischen den Umlaufbahnen (52, 53) der Wuchteinrichtung (50) maximal dreimal so groß ist wie eine Längserstreckung oder Höhe einer Umlaufbahn (52, 53) bezüglich der Drehachse.

5. Werkzeugmaschine nach einem der vorhergehenden Ansprüche, **dadurch gekennzeichnet, dass** ein Längsabstand bezüglich der Drehachse zwischen den Umlaufbahnen (52, 53) der Wuchteinrichtung (50) minimal die Hälfte, vorteilhaft mindestens das 1-fache oder 1,5-fache der Längserstreckung oder der Höhe einer Umlaufbahn (52, 53) bezüglich der Drehachse beträgt und/oder dass ein Innenradius der mindestens einen zweiten Umlaufbahn (53) größer als ein Außenradius der ersten Umlaufbahn (52) ist oder etwa dem Außenradius der ersten Umlaufbahn (52) entspricht und/oder dass der der Führungskörper (51) eine sich um die Drehachse erstreckende, insbesondere konische oder stufige, Außenumfangswand aufweist, die in einem Bereich näher bei der Werkzeugaufnahme (35) einen größeren Durchmesser aufweist als in einem Bereich, der einen größeren Abstand zu der Werkzeugaufnahme (35) aufweist, und/oder dass der Führungskörper (51) die Gestalt einer Glocke oder eines Kegelstumpfes aufweist.

6. Werkzeugmaschine nach einem der vorhergehenden Ansprüche, **dadurch gekennzeichnet, dass** der Führungskörper (51) ein Bestandteil eines Lüfterrads (68) ist und/oder dass an dem Führungskörper (51) Lüfterschaufeln (69), insbesondere einstückig, angeordnet sind.

7. Werkzeugmaschine nach einem der vorhergehenden Ansprüche, **dadurch gekennzeichnet, dass** die Werkzeugaufnahme (35) eine Exzentrizität bezüglich der Drehachse aufweist und/oder an einem Exzenterlager mit einer Exzentrizität bezüglich der Drehachse angeordnet ist, sodass das die Werkzeugaufnahme (35) exzentrisch zu der Drehachse gelagert ist.

8. Werkzeugmaschine nach einem der vorhergehenden Ansprüche, **dadurch gekennzeichnet, dass** in einem Innenraum des Führungskörpers (51) ein Lager, insbesondere ein Exzenterlager, angeordnet ist, mit dem die Werkzeugaufnahme (35) relativ zur Drehachse drehbar gelagert ist.

9. Werkzeugmaschine nach einem der vorhergehenden Ansprüche, **dadurch gekennzeichnet, dass** der Führungskörper (51) neben der die Werkzeugwelle (23) an dem Antriebsträger (80) drehbar lagernden Lageranordnung (27) angeordnet ist.

10. Werkzeugmaschine nach einem der vorhergehenden Ansprüche, **dadurch gekennzeichnet, dass** der Führungskörper (51) zwischen zwei Drehlagern, mit denen die Werkzeugwelle (23) an dem Antriebsträger (80) drehbar gelagert ist, an der Werkzeugwelle (23) gehalten ist.

11. Werkzeugmaschine nach einem der vorhergehenden Ansprüche, **dadurch gekennzeichnet, dass** kein Lager der die Werkzeugwelle (23) an dem Antriebsträger (80) lagernden Lageranordnung (27) in Bezug auf die Längserstreckung der Drehachse zwischen den Umlaufbahnen (52, 53) der Wuchteinrichtung (50) angeordnet ist und/oder dass der Führungskörper (51) eine Lageraufnahme für ein Lager (28, 29) der Lageranordnung (27) aufweist und/oder dass ein Lager (28, 29) der Lageranordnung (27), welches an der Werkzeugwelle (23) angeordnet ist, in einem Innenraum des Führungskörpers (51) angeordnet ist und/oder dass der Führungskörper (51) die Form einer Glocke aufweist, in deren Innenraum das Lager (28, 29) angeordnet ist und/oder dass die Umlaufbahnen (52, 53) Kreisbahnen sind, die mit radialem Abstand um eine Mittelachse verlaufen, wobei die Mittelachse und die Drehachse der Werkzeugwelle (23) koaxial sind, wobei vorteilhaft vorgesehen ist, dass der radiale Abstand der ersten Umlaufbahn (52) und/oder der mindestens einen zweiten Umlaufbahn (53) um maximal 0,05 Prozent, insbesondere maximal 0,07 Prozent, zweckmäßigerweise maximal 0,1 Prozent seiner Länge variiert und/oder eine Exzentrizität der ersten Umlaufbahn (52) und/oder der mindestens einen zweiten Umlaufbahn (53) bezüglich der Drehachse der Motorwelle (24) von maximal 0,05 Prozent, insbesondere maximal 0,07 Prozent, zweckmäßigerweise maximal 0,1 Prozent gegenüber einer idealen Kreisbahn aufweist.

12. Werkzeugmaschine nach einem der vorhergehenden Ansprüche, **dadurch gekennzeichnet, dass** an dem Führungskörper (51) eine zu der Drehachse exzentrische Wuchtmasse ortsfest angeordnet ist, wobei vorteilhaft vorgesehen ist, dass die Wuchtmasse an einer der Werkzeugaufnahme (35) zugewandten Seite des Führungskörpers (51) und/oder im Bereich eines Außenumfangs des Führungskörpers (51) mit maximalem Radialabstand zu der Drehachse angeordnet ist.

13. Werkzeugmaschine nach einem der vorhergehenden Ansprüche, **dadurch gekennzeichnet, dass** die Werkzeugwelle (23) eine Motorwelle (24) bildet, an der ein Rotor des Antriebsmotors angeordnet ist, und/oder dass die Werkzeugaufnahme (35) einstückig an der Werkzeugwelle (23) angeordnet ist und/oder dass die Werkzeugwelle (23) einen Antriebsabschnitt aufweist, mit dem der Antriebsmotor zum Drehantreiben der Werkzeugwelle (23), insbesondere anhand eines Getriebes oder Winkelgetriebes, drehgekoppelt ist.

14. Werkzeugmaschine nach einem der vorhergehenden Ansprüche, **dadurch gekennzeichnet, dass** der Antriebsträger (80) an einer Halterung (95) der Werkzeugmaschine beweglich gelagert ist, wobei eine Relativposition des Antriebsträgers (80) gegenüber der Halterung (95) durch die Wuchteinrichtung (50) verstellbar ist, wobei vorteilhaft vorgesehen ist, dass die Werkzeugmaschine (10) ein Maschinengehäuse (11) aufweist, an dem die Halterung (95) angeordnet ist oder welches die Halterung (95) bildet, und/oder dass die Halterung (95) einen Handgriff zum Ergreifen durch einen Bediener und/oder eine Mitnahmepartie zur Mitnahme durch einen Positionierantrieb (315) aufweist, anhand dessen die Werkzeugmaschine bezüglich einer Werkstückoberfläche positionierbar ist, und/oder dass der Antriebsträger (80) bezüglich der Halterung (95) durch eine zwischen dem Antriebsträger (80) und der Halterung (95) angeordnete Federanordnung (90) federnd gelagert ist, wobei die Federanordnung (90) vorteilhaft mindestens einen Puffer, insbesondere aus Gummi oder elastischem Kunststoff, aufweist, und/oder dass eine erste Eigenfrequenz des Antriebsträgers (80) bezüglich der Halterung (95) kleiner als eine vorbestimmte Umdrehungsfrequenz oder Drehzahl der Werkzeugaufnahme (35) ist, wobei vorteilhaft vorgesehen ist, dass die erste Eigenfrequenz mindestens fünfmal kleiner, insbesondere mindestens siebenmal kleiner oder mindestens achtmal kleiner, vorzugsweise mindestens neunmal kleiner oder mindestens zehnmal kleiner als die vorbestimmte Umdrehungsfrequenz oder Drehzahl der Werkzeugaufnahme (35) ist und/oder dass die vorbestimmte Umdrehungsfrequenz oder Drehzahl eine Maximal-Umdrehungsfrequenz oder Maximal-Drehzahl oder eine Nenn-Umdrehungsfrequenz oder Nenn-Drehzahl ist und/oder dass die erste Eigenfrequenz des Antriebsträgers (80) bezüglich der Halterung (95) durch eine Federkonstante der Federanordnung (90) eingestellt oder einstellbar ist.

15. Werkzeugmaschine nach einem der vorhergehenden Ansprüche, **dadurch gekennzeichnet, dass** sie einen Positionierantrieb (315) zum Positionieren der Werkzeugaufnahme (35) für das Arbeitswerkzeug (40) bezüglich einer Werkstückoberfläche für eine Bearbeitung der Werkstückoberfläche durch das Arbeitswerkzeug (40) aufweist und/oder dass sie eine Schleifmaschine oder eine Poliermaschine ist und/oder die Werkzeugaufnahme (35) zur Befestigung eines Tellerwerkzeugs als das Arbeitswerkzeug (40) ausgestaltet ist und/oder dass der Führungskörper (51) eine scheibenförmige oder tellerförmige oder domartige Gestalt aufweist und/oder die erste Umlaufbahn (52) und die mindestens eine zweite Umlaufbahn (53) nicht durch die Werkzeugwelle (23) miteinander verbunden sind und/oder sich kein Abschnitt der Werkzeugwelle (23) zwischen den Umlaufbahnen (52, 53) befindet.

## Claims

1. A machine tool, namely a handheld machine tool (10) or semi-stationary machine tool, having a drivetrain (108), which includes a tool shaft (23) rotatably mounted on a drive support (80) by means of a bearing assembly (27) and a tool holder (35), arranged on the tool shaft (23), for an in particular disk-like working tool (40), wherein the tool shaft (23) is rotationally drivable by a drive motor of the machine tool (10) around a rotational axis, and wherein a balancing device (50) is arranged on the tool shaft (23), which includes a guide body (51) having at least one orbital path (52) extending around the rotational axis and at least one balancing body (54, 55) movably mounted in the orbital path (52), wherein the at least one orbital path (52) arranged on the guide body (51) comprises a first orbital path (52) having a first radial distance to the rotational axis and at least one second orbital path (52, 53), which is at a longitudinal distance with respect to the rotational axis in relation to the first orbital path (52), and which has a greater second radial distance to the rotational axis than the first radial distance and is separated from the first orbital path (52), so that the balancing bodies (54, 55) arranged in the respective orbital path (52, 53) are held so they are non-adjustable between the orbital paths (52, 53) and/or in a cage like manner in their respective orbital path (52, 53), **characterized in that** the first and the at least one second orbital path (52, 53) comprise or form at least two orbital paths (52, 53), in which balancing bodies (54, 55) are arranged having different geometry and/or different weight and/or different sliding properties and/or in different numbers and/or made of different materials, and **in that** the guide body (51) includes only a single cover (70), using which the first orbital path (52) and/or the second orbital path (53) are closed.

2. The machine tool as claimed in claim 1, **characterized in that** the guide body (51) includes a main body (56), on which the first and at least one second orbital path (52, 53) are integrally formed, wherein it is advantageously provided that the first and the at least one second orbital path (52, 53) are produced by cutting machining of the main body (56), wherein the main body (56) in particular remains on a workpiece holder (WH) after completion of the production of the first orbital path (52) until the beginning of the production of the at least second orbital path (53).

3. The machine tool as claimed in any one of the preceding claims, **characterized in that** the guide body (51), in particular a main body (56) of the guide body (51) integrally including the orbital paths (52, 53), and the tool shaft (23) are integral, wherein the main body (56) remains advantageously on a workpiece holder (WH) to produce the tool shaft (43) and the first orbital path (52) and/or the at least second orbital path (53) and/or the cover (70) closes at least one orbital path (52, 53) of the guide body (51) parallel to the rotational axis and/or on the radial inside with respect to the rotational axis.

4. The machine tool as claimed in any one of the preceding claims, **characterized in that** at least one orbital path (52, 53) of the guide body (51) is completely closed in relation to the other orbital path (52, 53) or the other orbital paths (52, 53) of the guide body (51) and/or **in that** different damping fluids (L1, L2) are arranged in at least two orbital paths (52, 53) of the guide body (51), and/or **in that** of at least two orbital paths (52, 53) of the guide body (51), only one orbital path (52, 53) has a damping fluid and/or **in that** surfaces, which mount the respective at least one balancing body (54, 55) of the first orbital path (52), and the at least one second orbital path (53) have different sliding properties and/or different geometries and/or **in that** the orbital path (53) having the greatest radial distance to the rotational axis is closer to the tool holder (35) and/or to the working tool (40) than the at least one orbital path (52) having a lesser radial distance is to the rotational axis and/or **in that** a longitudinal distance with respect to the rotational axis between the orbital paths (52, 53) of the balancing device (50) is at most three times as large as a longitudinal extension or height of an orbital path (52, 53) with respect to the rotational axis.

5. The machine tool as claimed in any one of the preceding claims, **characterized in that** a longitudinal distance with respect to the rotational axis between the orbital paths (52, 53) of the balancing device (50) is at minimum one-half, preferably at least 1 time or 1.5 times the longitudinal extension of the height of an orbital path (52, 53) with respect to the rotational axis and/or **in that** an inner radius of the at least one second orbital path (53) is greater than an outer radius of the first orbital path (52) or approximately corresponds to the outer radius of the first orbital path (52) and/or **in that** the guide body (51) includes an outer circumferential wall, which extends around the rotational axis and is in particular conical or stepped, and which has a greater diameter in a region closer to the tool holder (35) than in a region which has a greater distance to the tool holder (35), and/or **in that** the guide body (51) has the form of a bell or a truncated cone.

6. The machine tool as claimed in any one of the preceding claims, **characterized in that** the guide body (51) is a part of a fan wheel (68) and/or **in that** fan blades (69) are arranged, in particular integrally, on the guide body (51).

7. The machine tool as claimed in any one of the preceding claims, **characterized in that** the tool holder (35) has an eccentricity with respect to the rotational axis and/or is arranged on an eccentric bearing having an eccentricity with respect to the rotational axis, so that the tool holder (35) is eccentrically mounted in relation to the rotational axis.

8. The machine tool as claimed in any one of the preceding claims, **characterized in that** a bearing, in particular an eccentric bearing, using which the tool holder (35) is rotatably mounted relative to the rotational axis, is arranged in an interior of the guide body (51).

9. The machine tool as claimed in any one of the preceding claims, **characterized in that** the guide body (51) is arranged adjacent to the bearing assembly (27) rotatably mounting the tool shaft (23) on the drive support (80).

10. The machine tool as claimed in any one of the preceding claims, **characterized in that** the guide body (51) is held on the tool shaft (23) between two rotational bearings, using which the tool shaft (23) is rotatably mounted on the drive support (80).

11. The machine tool as claimed in any one of the preceding claims, **characterized in that** no bearing of the bearing assembly (27) mounting the tool shaft (23) on the drive support (80) is arranged between the orbital paths (52, 53) of the balancing device (50) with respect to the longitudinal extension of the rotational axis and/or **in that** the guide body (51) includes a bearing receptacle for a bearing (28, 29) of the bearing assembly (27) and/or **in that** a bearing (28, 29) of the bearing assembly (27) which is arranged on the tool shaft (23) is arranged in an interior of the guide body (51) and/or **in that** the guide body (51) has the shape of a bell, in the interior of which the bearing (28, 29) is arranged and/or **in that** the orbital paths (52, 53) are circular paths, which extend at a radial distance around a center axis, wherein the center axis and the rotational axis of the tool shaft (23) are coaxial, wherein it is advantageously provided that the radial distance of the first orbital path (52) and/or the at least one second orbital path (53) varies by at most 0.05%, in particular at most 0.07%, expediently at most 0.1% of its length and/or has an eccentricity of the first orbital path (52) and/or the at least one second orbital path (53) with respect to the rotational axis of the motor shaft (24) of at most 0.05%, in particular at most 0.07%, expediently at most 0.1% in relation to an ideal circular path.

12. The machine tool as claimed in any one of the preceding claims, **characterized in that** a balancing mass eccentric in relation to the rotational axis is arranged fixedly on the guide body (51), wherein it is advantageously provided that the balancing mass is arranged on a side of the guide body (51) facing toward the tool holder (35) and/or in the region of an outer circumference of the guide body (51) having maximum radial distance to the rotational axis.

13. The machine tool as claimed in any one of the preceding claims, **characterized in that** the tool shaft (23) forms a motor shaft (24), on which a rotor of the drive motor is arranged, and/or **in that** the tool holder (35) is integrally arranged on the tool shaft (23) and/or **in that** the tool shaft (23) includes a drive section, to which the drive motor is rotationally coupled to rotationally drive the tool shaft (23), in particular by means of a gear unit or angle gear unit.

14. The machine tool as claimed in any one of the preceding claims, **characterized in that** the drive support (80) is movably mounted on a holder (95) of the machine tool, wherein a relative position of the drive support (80) in relation to the holder (95) is adjustable by the balancing device (50), wherein it is advantageously provided that the machine tool (10) includes a machine housing (11), on which the holder (95) is arranged, or which forms the holder (95), and/or **in that** the holder (95) includes a handle to be grasped by an operator and/or a dog part to be carried along by a positioning drive (315), by means of which the machine tool is positionable with respect to a workpiece surface, and/or that the drive support (80) is resiliently mounted with respect to the holder (95) by a spring assembly (90) arranged between the drive support (80) and the holder (95), wherein the spring assembly (90) advantageously includes at least one buffer, in particular made of rubber or elastic plastic, and/or that a first natural frequency of the drive support (80) with respect to the holder (95) is less than a predetermined revolution frequency or speed of the tool holder (35), wherein it is advantageously provided that the first natural frequency is at least five times less, in particular at least seven times less or at least eight times less, preferably at least nine times less or at least ten times less than the predetermined revolution frequency or speed of the tool holder (35) and/or **in that** the predetermined revolution frequency or speed is a maximum revolution frequency or maximum speed or a rated revolution frequency or rated speed and/or **in that** the first natural frequency of the drive support (80) with respect to the holder (95) is set or settable by a spring constant of the spring assembly (90).

15. The machine tool as claimed in any one of the preceding claims, **characterized in that** it includes a positioning drive (315) for positioning the tool holder (35) for the working tool (40) with respect to a workpiece surface for machining of the workpiece surface by the working tool (40) and/or **in that** it is a grinding machine or a polishing machine and/or the tool holder (34) is designed for fastening a disk tool as the working tool (40) and/or **in that** the guide body (51) has a plate-shaped or disk-shaped or dome-like form and/or the first orbital path (52) and the at least one second orbital path (53) are not connected to one another by the tool shaft (52) and/or no section of the tool shaft (23) is located between the orbital paths (52, 53).

## Revendications

1. Machine-outil, à savoir machine-outil manuelle (10) ou machine-outil semi-stationnaire, présentant une chaîne cinématique (108), qui présente un arbre (23) d'outil logé rotatif sur un support d'entraînement (80) à l'aide d'un agencement de palier (27), et un porte-outil (35) agencé sur l'arbre (23) d'outil pour un outil de travail (40) en particulier en forme d'assiette, dans laquelle l'arbre (23) d'outil peut être entraîné en rotation autour d'un axe de rotation par un moteur d'entraînement de la machine-outil (10) et dans laquelle un dispositif d'équilibrage (50) est agencé sur l'arbre (23) d'outil, lequel dispositif présente un corps de guidage (51) comportant au moins une piste périphérique (52) s'étendant autour de l'axe de rotation et au moins un corps d'équilibrage (54, 55) logé mobile dans la piste périphérique (52), dans laquelle ladite au moins une piste périphérique (52) agencée sur le corps de guidage (51) comprend une première piste périphérique (52) à une première distance radiale par rapport à l'axe de rotation et au moins une seconde piste périphérique (52, 53) à une distance longitudinale relative l'axe de rotation par rapport à la première piste périphérique (52), laquelle seconde piste présente une seconde distance radiale, par rapport à l'axe de rotation, supérieure à la première distance radiale et est séparée de la première piste périphérique (52), de telle sorte que les corps d'équilibrage (54, 55) agencés dans la piste périphérique (52, 53) respective sont maintenus dans leur piste périphérique (52, 53) respective sans pouvoir être réglés et/ou en forme de cage entre les pistes périphériques (52, 53), **caractérisée en ce que** la première et ladite au moins une seconde piste périphérique (52, 53) comprennent ou forment au moins deux pistes périphériques (52, 53) dans lesquelles sont agencés des corps d'équilibrage (54, 55) de géométrie différente et/ou de poids différent et/ou présentant des propriétés de glissement différentes et/ou en nombre différent et/ou en matériaux différents et **en ce que** le corps de guidage (51) ne présente qu'un seul couvercle (70) qui ferme la première piste périphérique (52) et la seconde piste périphérique (53).

2. Machine-outil selon la revendication 1, **caractérisée en ce que** le corps de guidage (51) présente un corps de base (56) sur lequel sont réalisées, d'un seul tenant, la première et au moins une seconde piste périphérique (52, 53), où il est prévu avantageusement que la première et ladite au moins une deuxième piste périphérique (52, 53) sont réalisées par un usinage par enlèvement de copeaux du corps de base (56), le corps de base (56) restant en particulier sur un dispositif de fixation de pièce (WH) à la fin de la réalisation de la première piste périphérique (52) jusqu'au début de la réalisation de ladite au moins une deuxième piste périphérique (53).

3. Machine-outil selon l'une des revendications précédentes, **caractérisée en ce que** le corps de guidage (51), en particulier un corps de base (56), présentant les pistes périphériques (52, 53) d'un seul tenant, du corps de guidage (51), et l'arbre (23) d'outil sont d'un seul tenant, le corps de base (56) restant avantageusement sur un dispositif de fixation de pièce (WH) pour la réalisation de l'arbre (43) d'outil et de la première piste périphérique (52) et/ou de ladite au moins une seconde piste périphérique (53) et/ou le couvercle (70) fermant au moins une piste périphérique (52, 53) du corps de guidage (51) parallèlement à l'axe de rotation et/ou radialement vers l'intérieur par rapport à l'axe de rotation.

4. Machine-outil selon l'une des revendications précédentes, **caractérisée en ce qu'**au moins une piste périphérique (52, 53) du corps de guidage (51) est complètement fermée par rapport à l'autre piste périphérique (52, 53) ou aux autres pistes périphériques (52, 53) du corps de guidage (51) et/ou **en ce que** des fluides d'amortissement (L1, L2) différents sont agencés dans au moins deux pistes périphériques (52, 53) du corps de guidage (51) et/ou **en ce que**, parmi au moins deux pistes périphériques (52, 53) du corps de guidage (51), seule une piste périphérique (52, 53) présente un fluide d'amortissement et/ou **en ce que** les surfaces logeant ledit au moins un corps d'équilibrage (54, 55) respectif de la première piste périphérique (52) et de ladite au moins une seconde piste périphérique (53) présentent des propriétés de glissement différentes et/ou des géométries différentes et/ou **en ce que** la piste périphérique (53) présentant la plus grande distance radiale par rapport à l'axe de rotation est plus proche du porte-outil (35) et/ou de l'outil de travail (40) que ladite au moins une piste périphérique (52) présentant une distance radiale plus petite par rapport à l'axe de rotation et/ou **en ce qu'**une distance longitudinale relative à l'axe de rotation entre les pistes périphériques (52, 53) du dispositif d'équilibrage (50) est au maximum trois fois plus grande qu'une étendue longitudinale ou qu'une hauteur d'une piste périphérique (52, 53) relative à l'axe de rotation.

5. Machine-outil selon l'une des revendications précédentes, **caractérisée en ce qu'**une distance longitudinale relative à l'axe de rotation entre les pistes périphériques (52, 53) du dispositif d'équilibrage (50) représente au minimum la moitié, avantageusement au moins 1 fois ou 1,5 fois l'étendue longitudinale ou la hauteur d'une piste périphérique (52, 53) relative à l'axe de rotation et/ou **en ce qu'**un rayon interne de ladite au moins une seconde piste périphérique (53) est plus grand qu'un rayon externe de la première piste périphérique (52) ou correspond environ au rayon externe de la première piste périphérique (52) et/ou **en ce que** le corps de guidage (51) présente une paroi périphérique externe, en particulier conique ou étagée, s'étendant autour de l'axe de rotation, laquelle paroi présente un plus grand diamètre dans la zone plus proche du porte-outil (35) que dans une zone qui présente une plus grande distance par rapport au porte-outil (35) et/ou **en ce que** le corps de guidage (51) présente la forme d'une cloche ou d'un cône tronqué.

6. Machine-outil selon l'une des revendications précédentes, **caractérisée en ce que** le corps de guidage (51) fait partie d'une roue (68) de ventilateur et/ou **en ce que** des pales (69) de ventilateur sont agencées, en particulier d'un seul tenant, sur le corps de guidage (51).

7. Machine-outil selon l'une des revendications précédentes, **caractérisée en ce que** le porte-outil (35) présente une excentricité relative à l'axe de rotation et/ou est agencé sur un palier excentrique présentant une excentricité relative à l'axe de rotation, de telle sorte que le porte-outil (35) est logé de manière excentrique par rapport à l'axe de rotation.

8. Machine-outil selon l'une des revendications précédentes, **caractérisée en ce qu'**un palier, en particulier un palier excentrique, est agencé dans un espace interne du corps de guidage (51), lequel palier logeant le porte-outil (35) de manière rotative par rapport à l'axe de rotation.

9. Machine-outil selon l'une des revendications précédentes, **caractérisée en ce que** le corps de guidage (51) est agencé à côté de l'agencement de palier (27) logeant de manière rotative l'arbre (23) d'outil sur le support d'entraînement (80).

10. Machine-outil selon l'une des revendications précédentes, **caractérisée en ce que** le corps de guidage (51) est maintenu sur l'arbre (23) d'outil entre deux paliers rotatifs avec lesquels l'arbre (23) d'outil est logé de manière rotative sur le support d'entraînement (80).

11. Machine-outil selon l'une des revendications précédentes, **caractérisée en ce qu'**aucun palier de l'agencement de palier (27) logeant l'arbre (23) d'outil sur le support d'entraînement (80) n'est agencé, par rapport à l'étendue longitudinale de l'axe de rotation, entre les pistes périphériques (52, 53) du dispositif d'équilibrage (50) et/ou **en ce que** le corps de guidage (51) présente un logement de palier pour un palier (28, 29) de l'agencement de palier (27) et/ou **en ce qu'**un palier (28, 29) de l'agencement de palier (27), qui est agencé sur l'arbre (23) d'outil, est agencé dans un espace interne du corps de guidage (51) et/ou **en ce que** le corps de guidage (51) présente la forme d'une cloche dans l'espace interne de laquelle est agencé le palier (28, 29) et/ou **en ce que** les pistes périphériques (52, 53) sont des pistes circulaires qui s'étendent avec une distance radiale autour d'un axe central, l'axe central et l'axe de rotation de l'arbre (23) d'outil étant coaxiaux, où il est avantageusement prévu que la distance radiale de la première piste périphérique (52) et/ou de ladite au moins une seconde piste périphérique (53) varie d'au maximum 0,05%, en particulier d'au maximum 0,07%, opportunément d'au maximum 0,1% de sa longueur et/ou présente une excentricité de la première piste périphérique (52) et/ou de ladite au moins une seconde piste périphérique (53), relative à l'axe de rotation de l'arbre (24) de moteur, d'au maximum 0,05%, en particulier d'au maximum 0,07%, opportunément d'au maximum 0,1% par rapport à une piste circulaire idéale.

12. Machine-outil selon l'une des revendications précédentes, **caractérisée en ce qu'**une masse d'équilibrage, excentrique par rapport à l'axe de rotation, est agencée de manière fixe sur le corps de guidage (51), où il est avantageusement prévu que la masse d'équilibrage est agencée sur un côté orienté vers le porte-outil (35) du corps de guidage (51) et/ou dans la zone d'une périphérie externe du corps de guidage (51) avec une distance radiale maximale par rapport à l'axe de rotation.

13. Machine-outil selon l'une des revendications précédentes, **caractérisée en ce que** l'arbre (23) d'outil forme un arbre (24) de moteur, sur lequel est agencé un rotor du moteur d'entraînement et/ou **en ce que** le porte-outil (35) est agencé, d'un seul tenant, sur l'arbre (23) d'outil et/ou **en ce que** l'arbre (23) d'outil présente une section d'entraînement à laquelle est accouplé en rotation le moteur d'entraînement pour l'entraînement rotation de l'arbre (23) d'outil, en particulier à l'aide d'un engrenage ou d'un engrenage angulaire.

14. Machine-outil selon l'une des revendications précédentes, **caractérisée en ce que** le support d'entraînement (80) est logé mobile sur un dispositif de fixation (95) de la machine-outil, une position relative du support d'entraînement (80) par rapport au dispositif de fixation (95) étant réglable par le dispositif d'équilibrage (50), où il est avantageusement prévu que la machine-outil (10) présente un boîtier (11) de machine, sur lequel est agencée le dispositif de fixation (95) ou qui forme le dispositif de fixation (95), et/ou **en ce que** le dispositif de fixation (95) présente une poignée pour la préhension par un utilisateur et/ou une partie d'entraînement pour l'entraînement par un entraînement de positionnement (315) à l'aide duquel la machine-outil peut être positionnée par rapport à une surface de pièce et/ou **en ce que** le support d'entraînement (80) est logé, par rapport au dispositif de fixation (95), avec un effet ressort par un agencement de ressort (90) agencé entre le support d'entraînement (80) et le dispositif de fixation (95), l'agencement de ressort (90) présentant avantageusement au moins un amortisseur, en particulier en caoutchouc ou en matériau synthétique élastique, et/ou **en ce qu'**une première fréquence propre du support d'entraînement (80), par rapport au dispositif de fixation (95), est inférieure à une fréquence de rotation ou une vitesse de rotation déterminée au préalable du porte-outil (35), où il est avantageusement prévu que la première fréquence propre est au moins cinq fois plus petite, en particulier au moins sept fois plus petite ou au moins huit fois plus petite, préférablement au moins neuf fois plus petite ou au moins dix fois plus petite que la fréquence rotation ou la vitesse de rotation déterminée au préalable du porte-outil (35) et/ou **en ce que** la fréquence de rotation ou la vitesse de rotation déterminée au préalable est une fréquence de rotation maximale ou une vitesse de rotation maximale ou une fréquence de rotation nominale ou une vitesse de rotation nominale et/ou **en ce que** la première fréquence propre du support d'entraînement (80) est réglée ou peut être réglée, par rapport à celle du dispositif de fixation (95), par une constante de ressort de l'agencement de ressort (90).

15. Machine-outil selon l'une des revendications précédentes, **caractérisée en ce qu'**elle présente un entraînement de positionnement (315) pour le positionnement du porte-outil (35) pour l'outil de travail (40) par rapport à une surface de pièce pour un usinage de la surface de pièce par l'outil de travail (40) et/ou **en ce qu'**il s'agit d'une ponceuse ou d'une polisseuse et/ou **en ce que** le porte-outil (35) est équipé pour fixer un outil à assiette en tant qu'outil de travail (40) et/ou **en ce que** le corps de guidage (51) présente une forme de disque ou d'assiette ou de dôme et/ou la première piste périphérique (52) et ladite au moins une seconde piste périphérique (53) ne sont pas reliées l'une à l'autre par l'arbre (23) d'outil et/ou aucune section de l'arbre (23) d'outil ne se trouve entre les pistes périphériques (52, 53).
